# EUROPEAN PATENT SPECIFICATION

(11) **EP 3 502 754 B1**
(45) Date of publication and mention of the grant of the patent: **11.11.2026**
(21) Application number: 19154866.8
(22) Date of filing: 06.05.2014
(51) Int. Cl.: G02B 1/10, G02B 1/11, C03C 17/34, C04B 35/58, C04B 35/597, G02B 1/113, G02B 1/115, G02B 1/14

(54) **LOW-COLOR SCRATCH-RESISTANT ARTICLES WITH A MULTILAYER OPTICAL FILM**
FARBARME KRATZFESTE ARTIKEL MIT EINEM OPTISCHEN MEHRSCHICHTFILM
ARTICLES RÉSISTANT AUX RAYURES FAIBLEMENT COLORÉS AVEC FILM OPTIQUE MULTICOUCHES

(30) Priority: 07.05.2013 US 201361820407 P; 13.09.2013 US 201361877568 P; 18.03.2014 US 201461954697 P
(43) Date of publication of application: 26.06.2019
(62) Document number(s) of the earlier application(s) in accordance with Art. 76 EPC: 14729792.3 / 2 994 784
(73) Proprietor: Corning Incorporated, Corning, New York 14831 (US)
(72) Inventor: BELLMAN, Robert Alan, Painted Post, New York 14870 (US); HART, Shandon Dee, Corning, New York 14830 (US); KOCH, Karl William III, Elmira, New York 14903 (US); PAULSON, Charles Andrew, Painted Post, New York 14870 (US); PRICE, James Joseph, Corning, New York 14830 (US)
(74) Representative: Elkington and Fife LLP

(56) References cited:
- EP-A1- 2 196 870
- JP-A- 2011 017 782
- US-A1- 2003 179 454
- US-A1- 2007 030 569

## Description

This application claims the benefit of priority under 35 U.S.C. § 119 of U.S. Provisional Application Serial Number 61/954,697, filed on March 18, 2014, U.S. Provisional Application Serial Number 61/877,568, filed on September 13, 2013, and U.S. Provisional Application Serial Number 61/820,407, filed on May 7, 2013.

### BACKGROUND

JP2011017782 discloses an antireflective film having high scratch resistance and capable of being formed on an optical glass substrate. EP2196870A1 discloses a cover glass for a watch.
The disclosure relates to scratch-resistant articles with retained optical properties and more particularly to articles that exhibit low color shift when viewed at different incident illumination angles and a high hardness.

Cover substrates are often used in consumer electronic products to protect critical devices within the product, to provide a user interface for input and/or display, and/or many other functions. Such consumer electronic products include mobile devices, such as smart phones, mp3 players and computer tablets. These applications and others also often demand durable (e.g., scratch-resistant) cover substrate, which also has strong optical performance characteristics. Often, the cover substrate includes glass for this purpose.

Strong optical performance in terms of maximum light transmission and minimum reflectivity are required in cover substrate applications. Furthermore, cover substrate applications require that the color exhibited or perceived, in reflection and/or transmission, does not change appreciably as the viewing angle (or incident illumination angle) is changed. This is because, if the color, reflectivity or transmission changes with viewing angle to an appreciable degree, the user of the product incorporating the cover glass will perceive a change in the color or brightness of the display, which can diminish the perceived quality of the display. Of these changes, a change in color is often the most noticeable and objectionable to users.

Known cover substrates include glass and film combinations that often exhibit scratches after use in harsh operating conditions. Evidence suggests that the damage caused by sharp contact that occurs in a single event is a primary source of visible scratches in such glass-film cover substrates used in mobile devices. Once a significant scratch appears on the cover substrate, the appearance of the product is degraded since the scratch causes an increase in light scattering, which may cause significant reduction in brightness, clarity and contrast of images on the display. Significant scratches can also affect the accuracy and reliability of touch sensitive displays. These scratches, and even less significant scratches, are unsightly and can affect product performance.

Single event scratch damage can be contrasted with abrasion damage. Cover substrates do not typically experience abrasion damage because abrasion damage is typically caused by reciprocating sliding contact from hard counter face objects (e.g., sand, gravel and sandpaper). Instead, cover substrates used in display applications typically endure only reciprocating sliding contact from soft objects, such as fingers. In addition, abrasion damage can generate heat, which can degrade chemical bonds in the film materials and cause flaking and other types of damage to the cover glass. In addition, since abrasion damage is often experienced over a longer term than the single events that cause scratches, the film material experiencing abrasion damage can also oxidize, which further degrades the durability of the film and thus the glass-film laminate. The single events that cause scratches generally do not involve the same conditions as the events that cause abrasion damage and therefore, the solutions often utilized to prevent abrasion damage may not be applicable to prevent scratches in cover substrates. Moreover, known scratch and abrasion damage solutions often compromise the optical properties.

Accordingly, there is a need for new cover substrates, and methods for their manufacture, which are scratch resistant and have good optical performance.

### SUMMARY

The invention concerns a device comprising a cover article according to claim 1 and a device comprising a cover article according to claim 12.

The article exhibits a surface hardness of about 8 GPa or greater, as measured on the coated surface by indenting the coated surface with a Berkovitch indenter to form an indent having an indentation depth of at least about 100nm from the surface of the coated surface. In some instances, the article may exhibit a surface hardness of up to about 500 GPa. The article may optionally include a crack mitigating layer disposed between the optical film and the substrate or within the optical film.

The optical film includes a scratch-resistant layer. The scratch-resistant layer may exhibit a hardness of about 8 GPa or greater. The scratch-resistant layer of some embodiments may exhibit a refractive index of about 1.7 or greater. The scratch-resistant layer may include one or more of AlN, Si₃N₄, AlOₓN_{y}, SiOₓN_{y}, Al₂O₃, SixCy, SiₓO_{y}C_{z}, ZrO₂, TiOₓN_{y}, diamond, diamond-like carbon, and SiᵤAlᵥOₓN_{y}.

The optical film includes an optical interference layer disposed between the scratch-resistant layer and the substrate. The optical interference layer includes a first low refractive index (RI) sub-layer and a second high RI sub-layer. The difference between the refractive index of the first low RI sub-layer and the refractive index of the second high RI sub-layer may be about 0.01 or greater. The optical interference layer includes a plurality of sub-layer sets (e.g., up to about 10 sub-layer sets), which includes a first low RI sub-layer and a second high RI sub-layer. The first low RI sub-layer may include one or more of SiO₂, Al₂O₃, GeO₂, SiO, AlOₓN_{y}, SiOₓN_{y}, SiᵤAlᵥOₓN_{y}, MgO, MgF₂, BaF₂, CaF₂, DyF₃, YbF₃, YF₃, and CeF₃. The second high RI sub-layer may include at least one of SiᵤAlᵥOₓN_{y}, Ta₂O₅, Nb₂O₅, AIN, Si₃N₄, AlOₓN_{y}, SiOₓN_{y}, HfO₂, TiO₂, ZrO₂, Y₂O₃, Al₂O₃, and MoO₃.

In some instances, the optical interference layer includes a third sub-layer. The third sub-layer may be disposed between the plurality of sub-layer sets and the scratch-resistant layer. Alternatively, the third sub-layer may be disposed between the substrate and the plurality of sub-layer sets. The third sub-layer of one or more embodiments may have a RI between the refractive index of the first low RI sub-layer and the refractive index of the second high RI sub-layer.

The first low RI sub-layer and/or the second high RI sub-layer of the optical interference layer may have an optical thickness (n*d) in the range from about 2 nm to about 200 nm. The optical interference layer exhibits a thickness of about 800 nm or less.

The optical interference layer may exhibit an average light reflection of about 0.5% or less over the optical wavelength regime. In some embodiments, the article exhibits an average transmittance or average reflectance having an average oscillation amplitude of about 5 percentage points or less over the optical wavelength regime.

The substrate of one or more embodiments may include an amorphous substrate or a crystalline substrate. The amorphous substrate can include a glass selected from the group consisting of soda lime glass, alkali aluminosilicate glass, alkali containing borosilicate glass and alkali aluminoborosilicate glass. The glass may be optionally chemically strengthened and/or may include a compressive stress (CS) layer with a surface CS of at least 250 MPa extending within the chemically strengthened glass from a surface of the chemically strengthened glass to a depth of layer (DOL). The DOL exhibited by such substrates may be at least about 10 µm.

Additional features and advantages will be set forth in the detailed description which follows. Additional features and advantages will be readily apparent to those skilled in the art from that description or recognized by practicing the embodiments described herein and in the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description, serve to explain principles and operation of the various embodiments.

### BRIEF DESCRIPTION OF THE DRAWINGS

Figure 1 is an illustration of a known substrate and a scratch-resistant material embodiment;
Figure 2 is an illustration of a known article including a single layer interference layer;
Figure 3 is a reflectance spectra for the article shown in Figure 2;
Figure 4 is a graph showing the range of calculated a* and b* color shifts based on the reflectance spectra shown in Figure3;
Figure 5 is illustration of an article according to one or more embodiments;
Figure 6 is a more detailed illustration of the article shown in Figure 5;
Figure 7 is a calculated reflectance spectra for the article having an optical interference layer with three sub-layer sets, according to modeled Example 1;
Figure 8 is a graph showing the range of calculated a* and b* color shifts for modeled Example 1;
Figure 9 is a schematic representation of the article according to modeled Example 2;
Figure 10 is a calculated reflectance spectra for the article according to modeled Example 2;
Figure 11 is a graph showing the range of calculated a* and b* color shifts for modeled Example 2;
Figure 12 is a schematic representation of the article according to modeled Example 3;
Figure 13 is a calculated reflectance spectra for the article according to modeled Example 3;
Figure 14 is a graph showing the range of calculated a* and b* color shifts for modeled Example 3;
Figure 15 is a schematic representation of the article according to modeled Example 4;
Figure 16 is a calculated reflectance spectra for the article according to modeled Example 4;
Figure 17 is a graph showing the range of calculated a* and b* color shifts for modeled Example 4;
Figure 18 is a schematic representation of the article according to modeled Example 5;
Figure 19 is a calculated reflectance spectra for the article according to modeled Example 5;
Figure 20 is a schematic representation of the article according to modeled Example 6;
Figure 21 is a calculated reflectance spectra for the article according to modeled Example 6;
Figure 22 is a schematic representation of the article according to modeled Example 7;
Figure 23 is a calculated reflectance spectra for the article according to modeled Example 7;

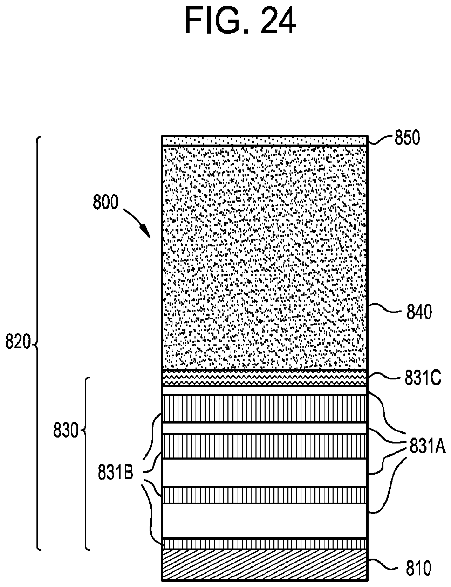

Figure 24 is a schematic representation of the article according to modeled Example 8;
Figure 25 is a calculated reflectance spectra for the article according to modeled Example 8;
Figure 26 is a graph showing the range of calculated a* and b* color shifts for modeled Examples 6-8;
Figure 27 is a schematic representation of the article according to modeled Example 9;
Figure 28 is a calculated reflectance spectra for the article according to modeled Example 9;
Figure 29 shows the measured transmittance spectra for articles according to Examples 10-11 and Comparative Example 12;
Figure 30 shows the measured reflected color coordinates for Examples 10-11 and bare glass at different incident illumination angles;
Figure 31 shows the measured transmitted light color coordinates for Examples 10-11 at an incident illumination angle of 5 degrees; and
Figure 32 is a schematic representation of the article according to modeled Example 13.

### DETAILED DESCRIPTION

Reference will now be made in detail to various embodiment(s), examples of which are illustrated in the accompanying drawings. Whenever possible, the same reference numerals will be used throughout the drawings to refer to the same or like parts.

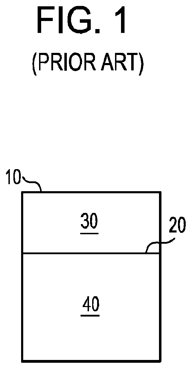

Known scratch-resistant materials, such as AlN, Si₃N₄, AlOₓN_{y}, and SiOₓN_{y}, have high refractive indices, for example, in the range from about 1.7 to about 2.1. Common substrates that include scratch-resistant materials are glass and plastic substrates. Glass and plastic materials typically have refractive indices in the range from about 1.45 to about 1.65. This difference in the refractive index of the scratch-resistant materials and the substrate can contribute to undesirable optical interference effects. These undesirable optical interference effects may be more pronounced where the scratch-resistant materials have a physical thickness in the range from about 0.05 to about 10 microns. Optical interference between reflected waves from the scratch-resistant material/air interface 10 (as shown in Figure 1) and the scratch-resistant material/substrate interface 20 (as shown in Figure 1) can lead to spectral reflectance oscillations that create apparent color in the scratch-resistant materials 30 (and/or the combination of the scratch-resistant materials 30 and substrate 40), particularly in reflection. The color shifts in reflection with viewing angle due to a shift in the spectral reflectance oscillations with incident illumination angle. The observed color and color shifts with incident illumination angle are often distracting or objectionable to device users, particularly under illumination with sharp spectral features such as fluorescent lighting and some LED lighting.

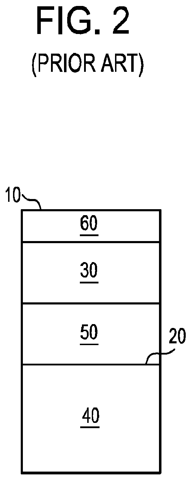

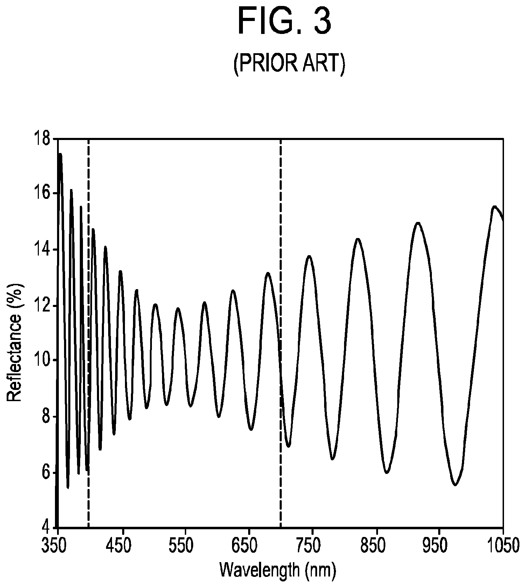

Observed color and color shifts can be reduced by minimizing the reflectance at one or both interfaces 10, 20, thus reducing reflectance oscillations and reflected color shifts for the entire article. For scratch-resistant materials, the reduction in reflectance is often most feasible at the scratch-material/substrate interface 20, while simultaneously retaining the high durability or scratch resistance of the scratch-resistant materials/air interface 10. Various ways to reduce reflectance include the use of a single optical interference layer (as shown in Figure 2) or a layer having a monotonic gradient in refractive index at the scratch-resistant material/substrate interface 20. Such options, however, often exhibit large oscillations in the transmittance and/or reflectance spectra under various illuminants. A single layer interference layer is included in the article shown in Figure 2. The article includes an alkali aluminoborosilicate glass substrate 10, a single layer interference layer 50 of Al₂O₃ having a physical thickness of about 80 nanometers (nm), an scratch-resistant layer 30 of SiᵤAlᵥOₓN_{y} having a physical thickness of about 2000 nm, and a layer 60 of SiO₂ having a physical thickness of about 10 nm. Figure 3 shows a modeled reflectance spectrum for the article illustrated in Figure 2. The spectrum exhibits oscillations over the optical wavelength regime having amplitudes in the range from about 3.5 percentage points (e.g., a low reflectance of about 8.5% and a peak reflectance of about 12%, at the wavelength range from about 520 nm to 540 nm) to about 8 percentage points (e.g., a low reflectance of about 6.5% and a peak reflectance to about 14.5%, at the wavelength of about 400 nm to 410 nm). As used herein, the term "amplitude" includes the peak-to-valley change in reflectance or transmittance. As used herein, the term "transmittance" is defined as the percentage of incident optical power within a given wavelength range transmitted through a material (e.g., the article, the substrate or the optical film or portions thereof). The term "reflectance" is similarly defined as the percentage of incident optical power within a given wavelength range that is reflected from a material (e.g., the article, the substrate, or the optical film or portions thereof). Transmittance and reflectance are measured using a specific linewidth. In one or more embodiments, the spectral resolution of the characterization of the transmittance and reflectance is less than 5 nm or 0.02 eV.

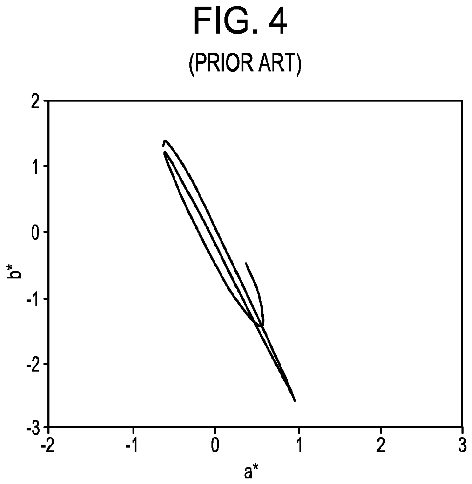

The phrase "average amplitude" includes the peak-to-valley change in reflectance or transmittance averaged over every possible 100 nm wavelength range within the optical wavelength regime. As used herein, the "optical wavelength regime" includes the wavelength range from about 420 nm to about 700 nm. From this information, it can be predicted that the article shown in Figures 2 and 3 will exhibit relatively large color shifts when viewed at different incident illumination angles from normal incidence under different illuminants, as shown in Figure 4.

The embodiments of this disclosure utilize an optical interference layer including multiple layers disposed between the substrate and the scratch-resistant materials. The optical interference layer achieves improved optical performance, in terms of colorlessness and/or smaller color shifts with viewed at varying incident illumination angles from normal incidence under different illuminants. Such optical interference layers are amenable to faster manufacturing over monotonic gradient designs, and articles incorporating optical interference layers provide scratch-resistance and superior optical properties.

A first aspect of this disclosure pertains to an article that exhibits colorlessness even when viewed at different incident illumination angles under an illuminant. In one or more embodiments, the article exhibits a color shift of about 2 or less for any incidental illumination angles in the ranges provided herein. As used herein, the phrase "color shift" refers to the change in both a* and b*, under the CIE L*, a*, b* colorimetry system. For example, color shift may be determined using the following equation: √((a*₂-a*₁)²+(b*₂-b*₁)²), a* and b* coordinates of the article when viewed at normal incidence (i.e., a*₁, and b*₁) and at an incident illumination angle away from normal incidence (i.e., a*₂, and b*₂), provided that the incident illumination angle is different from normal incidence and in some cases differs from normal incidence by at least about 2 degrees or about 5 degrees. Measurements of the various colors over a collection of different observers indicates that the average observer sees a just-noticeable difference in the two colors when the color shift is of about 2.In some instances, a color shift of about 2 or less is exhibited by the article when viewed at various incident illumination angles from normal incidence, under an illuminant. In some instances the color shift is about 1.9 or less, 1.8 or less, 1.7 or less, 1.6 or less, 1.5 or less, 1.4 or less, 1.3 or less, 1.2 or less, 1.1 or less, 1 or less, 0.9 or less, 0.8 or less, 0.7 or less, 0.6 or less, 0.5 or less, 0.4 or less, 0.3 or less, 0.2 or less, or 0.1 or less. In some embodiments, the color shift may be about 0. The illuminant can include standard illuminants as determined by the CIE, including A illuminants (representing tungsten-filament lighting), B illuminants (daylight simulating illuminants), C illuminants (daylight simulating illuminants), D series illuminants (representing natural daylight), and F series illuminants (representing various types of fluorescent lighting). In specific examples, the articles exhibit a color shift of about 2 or less when viewed at incident illumination angle from normal incidence under a CIE F2, F10, F11, F12 or D65 illuminant. The incident illumination angle may be in the range from about 0 degrees to about 80 degrees, from about 0 degrees to about 75 degrees, from about 0 degrees to about 70 degrees, from about 0 degrees to about 65 degrees, from about 0 degrees to about 60 degrees, from about 0 degrees to about 55 degrees, from about 0 degrees to about 50 degrees, from about 0 degrees to about 45 degrees, from about 0 degrees to about 40 degrees, from about 0 degrees to about 35 degrees, from about 0 degrees to about 30 degrees, from about 0 degrees to about 25 degrees, from about 0 degrees to about 20 degrees, from about 0 degrees to about 15 degrees, from about 5 degrees to about 80 degrees, from about 5 degrees to about 80 degrees, from about 5 degrees to about 70 degrees, from about 5 degrees to about 65 degrees, from about 5 degrees to about 60 degrees, from about 5 degrees to about 55 degrees, from about 5 degrees to about 50 degrees, from about 5 degrees to about 45 degrees, from about 5 degrees to about 40 degrees, from about 5 degrees to about 35 degrees, from about 5 degrees to about 30 degrees, from about 5 degrees to about 25 degrees, from about 5 degrees to about 20 degrees, from about 5 degrees to about 15 degrees, and all ranges and sub-ranges therebetween, away from normal incidence. The article may exhibit the maximum color shifts described herein at and along all the incident illumination angles in the range from about 0 degrees to about 80 degrees away from normal incidence. In one example, the article may exhibit a color shift of 2 or less at any incident illumination angle in the range from about 0 degrees to about 60 degrees, from about 2 degrees to about 60 degrees, or from about 5 degrees to about 60 degrees away from normal incidence.

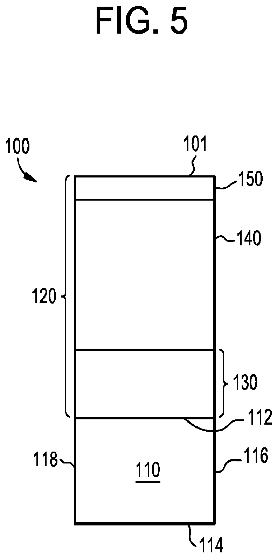

Referring to Figure 5, the article 100 according to one or more embodiments includes a substrate 110, and an optical film 120 disposed on the substrate. The substrate 110 includes opposing major surfaces 112, 114 and opposing minor surfaces 116, 118. The optical film 120 is shown in Figure 5 as being disposed on a first opposing major surface 112; however, the optical film 120 may be disposed on the second opposing major surface 114 and/or one or both of the opposing minor surfaces, in addition to or instead of being disposed on the first opposing major surface 112. The article 100 includes a coated surface 101.

The optical film 120 includes at least one layer of at least one material. The term "layer" may include a single layer or may include one or more sub-layers. Such sub-layers may be in direct contact with one another. The sub-layers may be formed from the same material or two or more different materials. In one or more alternative embodiments, such sub-layers may have intervening layers of different materials disposed therebetween. In one or more embodiments a layer may include one or more contiguous and uninterrupted layers and/or one or more discontinuous and interrupted layers (i.e., a layer having different materials formed adjacent to one another). A layer or sub-layers may be formed by any known method in the art, including discrete deposition or continuous deposition processes. In one or more embodiments, the layer may be formed using only continuous deposition processes, or, alternatively, only discrete deposition processes.

As used herein, the term "dispose" includes coating, depositing and/or forming a material onto a surface using any known method in the art. The disposed material may constitute a layer, as defined herein. The phrase "disposed on" includes the instance of forming a material onto a surface such that the material is in direct contact with the surface and also includes the instance where the material is formed on a surface, with one or more intervening material(s) is between the disposed material and the surface. The intervening material(s) may constitute a layer, as defined herein.

The article 100 exhibits an average hardness of about 8 GPa or greater, about 10 GPa or greater, about 14 GPa or greater, about 18 GPa or greater, as measured on the coated surface 101 by indenting the coated surface with a Berkovitch indenter to form an indent having an indentation depth of at least about 100 nm from the surface of the coated surface. In some embodiments, the average hardness of the article may be in the range from about 9 GPa to about 30 GPa, from about 10 GPa to about 30 GPa, from about 12 GPa to about 30 GPa, from about 12 GPa to about 25 GPa, from about 15 GPa to about 25 GPa, from about 16 GPa to about 24 GPa, from about 18 GPa to about 22 GPa and all ranges and sub-ranges therebetween.

In one or more embodiments, article 100 also exhibits abrasion resistance. In some embodiments, abrasion resistance is measured by known tests in the art such as those using a Crockmeter, a Taber abraser and other similar standard instruments. For example, Crockmeters are used to determine the Crock resistance of a surface subjected to such rubbing. The Crockmeter subjects a surface to direct contact with a rubbing tip or "finger" mounted on the end of a weighted arm. The standard finger supplied with the Crockmeter is a 15 millimeter (mm) diameter solid acrylic rod. A clean piece of standard crocking cloth is mounted to this acrylic finger. The finger then rests on the sample with a pressure of 900 g and the arm is mechanically moved back and forth repeatedly across the sample in an attempt to observe a change in the durability/crock resistance. The Crockmeter used in the tests described herein is a motorized model that provides a uniform stroke rate of 60 revolutions per minute. The Crockmeter test is described in ASTM test procedure F1319-94, entitled "Standard Test Method for Determination of Abrasion and Smudge Resistance of Images Produced from Business Copy Products,". Crock resistance or durability of the coated articles described herein is determined by optical (e.g., reflectance, haze, or transmittance) measurements after a specified number of wipes as defined by ASTM test procedure F1319-94. A "wipe" is defined as two strokes or one cycle, of the rubbing tip or finger.

According to one or more embodiments, the article 100 exhibits an average light transmission of about 80% or greater. The term "light transmission" refers to the amount of light that is transmitted through a medium. The measure of light transmission is the difference between the amount of light that enters the medium and the amount of light that exits the medium. In other words, light transmission is the light that has traveled through a medium without being absorbed or scattered. The term "average light transmission" refers to spectral average of the light transmission multiplied by the luminous efficiency function, as described by CIE standard observer. The article 100 of specific embodiments may exhibit an average light transmission of 80% or greater, 82% or greater, 85% or greater, 90% or greater, 90.5% or greater, 91% or greater, 91.5% or greater, 92% or greater, 92.5% or greater, 93% or greater, 93.5% or greater, 94% or greater, 94.5% or greater, or 95% or greater.

In one or more embodiments, the article 100 has a total reflectivity that 20% or less. For example, the article may have a total reflectivity of 20% or less, 15%, or less, 10% or less, 9% or less, 8% or less, 7% or less, 6% or less. In some specific embodiments, the article has a total reflectivity of 6.9% or less, 6.8% or less, 6.7% or less, 6.6% or less, 6.5% or less, 6.4% or less, 6.3% or less, 6.2% or less, 6.1% or less, 6.0% or less, 5.9% or less, 5.8% or less, 5.7% or less, 5.6% or less, or 5.5% or less. In accordance with one or more embodiments, the article 100 has a total reflectivity that is the same or less than the total reflectivity of the substrate 110.

In one or more embodiments, the article 100 exhibits a relatively flat transmittance spectrum, reflectance spectrum or transmittance and reflectance spectrum over the optical wavelength regime. In some embodiments, the relatively flat transmittance and/or reflectance spectrum includes an average oscillation amplitude of about 5 percentage points or less along the entire optical wavelength regime or wavelength range segments in the optical wavelength regime. Wavelength range segments may be about 50 nm, about 100 nm, about 200 nm or about 300 nm. In some embodiments, the average oscillation amplitude may be about 4.5 percentage points or less, about 4 percentage points or less, about 3.5 percentage points or less, about 3 percentage points or less, about 2.5 percentage points or less, about 2 percentage points or less, about 1.75 percentage points or less, about 1.5 percentage points or less, about 1.25 percentage points or less, about 1 percentage point or less, about 0.75 percentage points or less, about 0.5 percentage points of less, about 0.25 percentage points or less, or about 0 percentage points, and all ranges and sub-ranges therebetween. In one or more specific embodiments, the article exhibits a transmittance over a selected wavelength range segment of about 100 nm or 200 nm over the optical wavelength regime, wherein the oscillations from the spectra have a maximum peak of about 80%, about 82%, about 84%, about 86%, about 87%, about 88%, about 89%, about 90%, about 91%, about 92%, about 93%, about 94%, or about 95%, and all ranges and sub-ranges therebetween.

In some embodiments, the relatively flat average transmittance and/or average reflectance includes maximum oscillation amplitude, expressed as a percent of the average transmittance or average reflectance, along a specified wavelength range segment in the optical wavelength regime. The average transmittance or average reflectance would also be measured along the same specified wavelength range segment in the optical wavelength regime. The wavelength range segment may be about 50 nm, about 100 nm or about 200 nm. In one or more embodiments, the article 100 exhibits an average transmittance and/or average reflectance with an average oscillation amplitude of about 10% or less, about 5 % or less, about 4.5% of less, about 4 % or less, about 3.5% or less, about 3 % or less, about 2.5% or less, about 2% or less, about 1.75% or less, about 1.5% or less, about 1.25% or less, about 1% or less, about 0.75% or less, about 0.5% or less, about 0.25% or less, or about 0.1% or less, and all ranges and sub-ranges therebetween. Such percent-based average oscillation amplitude may be exhibited by the article along wavelength ranges segments of about 50 nm, about 100 nm, about 200 nm or about 300 nm, in the optical wavelength regime. For example, an article may exhibit an average transmittance of about 85% along the wavelength range from about 500 nm to about 600 nm, which is a wavelength range segment of about 100 nm, within the optical wavelength regime. The article may also exhibit a percent-based oscillation amplitude of about 3% along the same wavelength range (500 nm to about 600 nm), which means that along the wavelength range from 500 nm to 600 nm, the absolute (non-percent-based) oscillation amplitude is about 2.55 percentage points.

### Substrate

The substrate 110 may include an amorphous substrate, a crystalline substrate or a combination thereof. The substrate 110 may be formed from man-made materials and/or naturally occurring materials. In some specific embodiments, the substrate 110 may specifically exclude plastic and/or metal substrates. In one or more embodiments, the substrate exhibits a refractive index in the range from about 1.45 to about 1.55. In specific embodiments, the substrate 110 may exhibit an average strain-to-failure at a surface on one or more opposing major surface that is 0.5% or greater, 0.6% or greater, 0.7% or greater, 0.8% or greater, 0.9% or greater, 1% or greater, 1.1% or greater, 1.2% or greater, 1.3% or greater, 1.4% or greater 1.5% or greater or even 2% or greater, as measured using ball-on-ring testing using at least 5, at least 10, at least 15, or at least 20 samples. In specific embodiments, the substrate 110 may exhibit an average strain-to-failure at its surface on one or more opposing major surface of about 1.2%, about 1.4%, about 1.6%, about 1.8%, about 2.2%, about 2.4%, about 2.6%, about 2.8%, or about 3% or greater.

Suitable substrates 110 may exhibit an elastic modulus (or Young's modulus) in the range from about 30 GPa to about 120 GPa. In some instances, the elastic modulus of the substrate may be in the range from about 30 GPa to about 110 GPa, from about 30 GPa to about 100 GPa, from about 30 GPa to about 90 GPa, from about 30 GPa to about 80 GPa, from about 30 GPa to about 70 GPa, from about 40 GPa to about 120 GPa, from about 50 GPa to about 120 GPa, from about 60 GPa to about 120 GPa, from about 70 GPa to about 120 GPa, and all ranges and sub-ranges therebetween.

In one or more embodiments, the amorphous substrate may include glass, which may be strengthened or non-strengthened. Examples of suitable glass include soda lime glass, alkali aluminosilicate glass, alkali containing borosilicate glass and alkali aluminoborosilicate glass. In some variants, the glass may be free of lithia. In one or more alternative embodiments, the substrate 110 may include crystalline substrates such as glass ceramic substrates (which may be strengthened or non-strengthened) or may include a single crystal structure, such as sapphire. In one or more specific embodiments, the substrate 110 includes an amorphous base (e.g., glass) and a crystalline cladding (e.g., sapphire layer, a polycrystalline alumina layer and/or or a spinel (MgAl₂O₄) layer).

The substrate 110 may be substantially planar or sheet-like, although other embodiments may utilize a curved or otherwise shaped or sculpted substrate. The substrate 110 may be substantially optically clear, transparent and free from light scattering. In such embodiments, the substrate may exhibit an average light transmission over the optical wavelength regime of about 85% or greater, about 86% or greater, about 87% or greater, about 88% or greater, about 89% or greater, about 90% or greater, about 91% or greater or about 92% or greater. In one or more alternative embodiments, the substrate 110 may be opaque or exhibit an average light transmission over the optical wavelength regime of less than about 10%, less than about 9%, less than about 8%, less than about 7%, less than about 6%, less than about 5%, less than about 4%, less than about 3%, less than about 2%, less than about 1%, or less than about 0%. In substrate 110 may optionally exhibit a color, such as white, black, red, blue, green, yellow, orange etc.

Additionally or alternatively, the physical thickness of the substrate 110 may vary along one or more of its dimensions for aesthetic and/or functional reasons. For example, the edges of the substrate 110 may be thicker as compared to more central regions of the substrate 110. The length, width and physical thickness dimensions of the substrate 110 may also vary according to the application or use of the article 100.

The substrate 110 may be provided using a variety of different processes. For instance, where the substrate 110 includes an amorphous substrate such as glass, various forming methods can include float glass processes and down-draw processes such as fusion draw and slot draw.

Once formed, a substrate 110 may be strengthened to form a strengthened substrate. As used herein, the term "strengthened substrate" may refer to a substrate that has been chemically strengthened, for example through ion-exchange of larger ions for smaller ions in the surface of the substrate. However, other strengthening methods known in the art, such as thermal tempering, or utilizing a mismatch of the coefficient of thermal expansion between portions of the substrate to create compressive stress and central tension regions, may be utilized to form strengthened substrates.

Where the substrate is chemically strengthened by an ion exchange process, the ions in the surface layer of the substrate are replaced by - or exchanged with - larger ions having the same valence or oxidation state. Ion exchange processes are typically carried out by immersing a substrate in a molten salt bath containing the larger ions to be exchanged with the smaller ions in the substrate. It will be appreciated by those skilled in the art that parameters for the ion exchange process, including, but not limited to, bath composition and temperature, immersion time, the number of immersions of the substrate in a salt bath (or baths), use of multiple salt baths, additional steps such as annealing, washing, and the like, are generally determined by the composition of the substrate and the desired compressive stress (CS), depth of compressive stress layer (or depth of layer) of the substrate that result from the strengthening operation. By way of example, ion exchange of alkali metal-containing glass substrates may be achieved by immersion in at least one molten bath containing a salt such as, but not limited to, nitrates, sulfates, and chlorides of the larger alkali metal ion. The temperature of the molten salt bath typically is in a range from about 380°C up to about 450°C, while immersion times range from about 15 minutes up to about 40 hours. However, temperatures and immersion times different from those described above may also be used.

In addition, non-limiting examples of ion exchange processes in which glass substrates are immersed in multiple ion exchange baths, with washing and/or annealing steps between immersions, are described in U.S. Patent Application No. 12/500,650, filed July 10, 2009, by Douglas C. Allan et al., entitled "Glass with Compressive Surface for Consumer Applications" and claiming priority from U.S. Provisional Patent Application No. 61/079,995, filed July 11, 2008, in which glass substrates are strengthened by immersion in multiple, successive, ion exchange treatments in salt baths of different concentrations; and U.S. Patent 8,312,739, by Christopher M. Lee et al., issued on November 20, 2012, and entitled "Dual Stage Ion Exchange for Chemical Strengthening of Glass," and claiming priority from U.S. Provisional Patent Application No. 61/084,398, filed July 29, 2008, in which glass substrates are strengthened by ion exchange in a first bath is diluted with an effluent ion, followed by immersion in a second bath having a smaller concentration of the effluent ion than the first bath.

The degree of chemical strengthening achieved by ion exchange may be quantified based on the parameters of central tension (CT), surface CS, and depth of layer (DOL). Surface CS may be measured near the surface or within the strengthened glass at various depths. A maximum CS value may include the measured CS at the surface (CSₛ) of the strengthened substrate. The CT, which is computed for the inner region adjacent the compressive stress layer within a glass substrate, can be calculated from the CS, the physical thickness t, and the DOL. CS and DOL are measured using those means known in the art. Such means include, but are not limited to, measurement of surface stress (FSM) using commercially available instruments such as the FSM-6000, manufactured by Luceo Co., Ltd. (Tokyo, Japan), or the like, and methods of measuring CS and DOL are described in ASTM 1422C-99, entitled "Standard Specification for Chemically Strengthened Flat Glass," and ASTM 1279.19779 "Standard Test Method for Non-Destructive Photoelastic Measurement of Edge and Surface Stresses in Annealed, Heat-Strengthened, and Fully-Tempered Flat Glass,". Surface stress measurements rely upon the accurate measurement of the stress optical coefficient (SOC), which is related to the birefringence of the glass substrate. SOC in turn is measured by those methods that are known in the art, such as fiber and four point bend methods, both of which are described in ASTM standard C770-98 (2008), entitled "Standard Test Method for Measurement of Glass Stress-Optical Coefficient,", and a bulk cylinder method. The relationship between CS and CT is given by the expression (1): $CT = \left(CS\cdot DOL\right) / \left(t-2 DOL\right)$ (1). wherein t is the physical thickness (µm) of the glass article. In various sections of the disclosure, CT and CS are expressed herein in megaPascals (MPa), physical thickness t is expressed in either micrometers (µm) or millimeters (mm) and DOL is expressed in micrometers (µm).

In one embodiment, a strengthened substrate 110 can have a surface CS of 250 MPa or greater, 300 MPa or greater, e.g., 400 MPa or greater, 450 MPa or greater, 500 MPa or greater, 550 MPa or greater, 600 MPa or greater, 650 MPa or greater, 700 MPa or greater, 750 MPa or greater or 800 MPa or greater. The strengthened substrate may have a DOL of 10µm or greater, 15 µm or greater, 20 µm or greater (e.g., 25 µm, 30 µm, 35 µm, 40 µm, 45 µm, 50 µm or greater) and/or a CT of 10 MPa or greater, 20 MPa or greater, 30 MPa or greater, 40 MPa or greater (e.g., 42 MPa, 45 MPa, or 50 MPa or greater) but less than 100 MPa (e.g., 95, 90, 85, 80, 75, 70, 65, 60, 55 MPa or less). In one or more specific embodiments, the strengthened substrate has one or more of the following: a surface CS greater than 500 MPa, a DOL greater than 15 µm, and a CT greater than 18 MPa.

Example glasses that may be used in the substrate may include alkali aluminosilicate glass compositions or alkali aluminoborosilicate glass compositions, though other glass compositions are contemplated. Such glass compositions are capable of being chemically strengthened by an ion exchange process. One example glass composition comprises SiO₂, B₂O₃ and Na₂O, where (SiO₂ + B₂O₃) ≥ 66 mol. %, and Na₂O ≥ 9 mol. %. In an embodiment, the glass composition includes at least 6 wt.% aluminum oxide. In a further embodiment, the substrate includes a glass composition with one or more alkaline earth oxides, such that a content of alkaline earth oxides is at least 5 wt.%. Suitable glass compositions, in some embodiments, further comprise at least one of K₂O, MgO, and CaO. In a particular embodiment, the glass compositions used in the substrate can comprise 61-75 mol.% SiO2; 7-15 mol.% Al₂O₃; 0-12 mol.% B₂O₃; 9-21 mol.% Na₂O; 0-4 mol.% K₂O; 0-7 mol.% MgO; and 0-3 mol.% CaO.

A further example glass composition suitable for the substrate comprises: 60-70 mol.% SiO₂; 6-14 mol.% Al₂O₃; 0-15 mol.% B₂O₃; 0-15 mol.% Li₂O; 0-20 mol.% Na₂O; 0-10 mol.% K₂O; 0-8 mol.% MgO; 0-10 mol.% CaO; 0-5 mol.% ZrO₂; 0-1 mol.% SnO₂; 0-1 mol.% CeO₂; less than 50 ppm As₂O₃; and less than 50 ppm Sb₂O₃; where 12 mol.% ≤ (Li₂O + Na₂O + K₂O) ≤ 20 mol.% and 0 mol.% ≤ (MgO + CaO) ≤ 10 mol.%.

A still further example glass composition suitable for the substrate comprises: 63.5-66.5 mol.% SiO₂; 8-12 mol.% Al₂O₃; 0-3 mol.% B₂O₃; 0-5 mol.% Li₂O; 8-18 mol.% Na₂O; 0-5 mol.% K₂O; 1-7 mol.% MgO; 0-2.5 mol.% CaO; 0-3 mol.% ZrO₂; 0.05-0.25 mol.% SnO₂; 0.05-0.5 mol.% CeO₂; less than 50 ppm As₂O₃; and less than 50 ppm Sb₂O₃; where 14 mol.% ≤ (Li₂O + Na₂O + K₂O) ≤ 18 mol.% and 2 mol.% ≤ (MgO + CaO) ≤ 7 mol.%.

In a particular embodiment, an alkali aluminosilicate glass composition suitable for the substrate comprises alumina, at least one alkali metal and, in some embodiments, greater than 50 mol.% SiO₂, in other embodiments at least 58 mol.% SiO₂, and in still other embodiments at least 60 mol.% SiO₂, wherein the ratio $\frac{{Al}_{2} {O}_{3} + {B}_{2} {O}_{3}}{\sum mod ifiers} > 1$, where in the ratio the components are expressed in mol.% and the modifiers are alkali metal oxides. This glass composition, in particular embodiments, comprises: 58-72 mol.% SiO₂; 9-17 mol.% Al₂O₃; 2-12 mol.% B₂O₃; 8-16 mol.% Na₂O; and 0-4 mol.% K₂O, wherein the ratio $\frac{{Al}_{2} {O}_{3} + {B}_{2} {O}_{3}}{\sum mod ifiers} > 1$.

In still another embodiment, the substrate may include an alkali aluminosilicate glass composition comprising: 64-68 mol.% SiO₂; 12-16 mol.% Na₂O; 8-12 mol.% Al₂O₃; 0-3 mol.% B₂O₃; 2-5 mol.% K₂O; 4-6 mol.% MgO; and 0-5 mol.% CaO, wherein: 66 mol.% ≤ SiO₂ + B₂O₃ + CaO ≤ 69 mol.%; Na₂O + K₂O + B₂O₃ + MgO + CaO + SrO > 10 mol.%; 5 mol.% ≤ MgO + CaO + SrO ≤ 8 mol.%; (Na₂O + B₂O₃) - Al₂O₃ ≤ 2 mol.%; 2 mol.% ≤ Na₂O - Al₂O₃ ≤ 6 mol.%; and 4 mol.% ≤ (Na₂O + K₂O) - Al₂O₃ ≤ 10 mol.%.

In an alternative embodiment, the substrate may comprise an alkali aluminosilicate glass composition comprising: 2 mol% or more of Al₂O₃ and/or ZrO₂, or 4 mol% or more of Al₂O₃ and/or ZrO₂.

Where the substrate 110 includes a crystalline substrate, the substrate may include a single crystal, which may include Al₂O₃. Such single crystal substrates are referred to as sapphire. Other suitable materials for a crystalline substrate include polycrystalline alumina layer and/or spinel (MgAl₂O₄).

Optionally, the crystalline substrate 110 may include a glass ceramic substrate, which may be strengthened or non-strengthened. Examples of suitable glass ceramics may include Li₂O-A|₂O₃-SiO₂ system (i.e. LAS-System) glass ceramics, MgO-Al₂O₃-SiO₂ system (i.e. MAS-System) glass ceramics, and/or glass ceramics that include a predominant crystal phase including β-quartz solid solution, β-spodumene ss, cordierite, and lithium disilicate. The glass ceramic substrates may be strengthened using the chemical strengthening processes disclosed herein. In one or more embodiments, MAS-System glass ceramic substrates may be strengthened in Li₂SO₄ molten salt, whereby an exchange of 2Li⁺ for Mg²⁺ can occur.

The substrate 110 according to one or more embodiments can have a physical thickness ranging from about 100 µm to about 5 mm. Example substrate 110 physical thicknesses range from about 100 µm to about 500 µm (e.g., 100, 200, 300, 400 or 500 µm). Further example substrate 110 physical thicknesses range from about 500 µm to about 1000 µm (e.g., 500, 600, 700, 800, 900 or 1000 µm). The substrate 110 may have a physical thickness greater than about 1 mm (e.g., about 2, 3, 4, or 5 mm). In one or more specific embodiments, the substrate 110 may have a physical thickness of 2 mm or less or less than 1 mm. The substrate 110 may be acid polished or otherwise treated to remove or reduce the effect of surface flaws.

### Optical Film

As shown in Figure 5-6, the optical film 120 may include a plurality of layers 130, 140, 150. Additional layers may also be included in optical film 120. Moreover, in some embodiments, one or more films or layers may be disposed on the opposite side of the substrate 110 from the optical film 120 (i.e., on major surface 114).

The physical thickness of the optical film 120 may be in the range from about 0.1 µm to about 3 µm. In some instances, the physical thickness of the optical film 120 may be in the range from about 0.1 µm to about 2.9 µm, from about 0.1 µm to about 2.8 µm, from about 0.1 µm to about 2.7 µm, from about 0.1 µm to about 2.6 µm, from about 0.1 µm to about 2.5 µm, from about 0.1 µm to about 2.4 µm, from about 0.1 µm to about 2.3 µm, from about 0.1 µm to about 2.2 µm, from about 0.1 µm to about 2.1 µm, from about 0.1 µm to about 2 µm, from about 0.5 µm to about 3 µm, from about 1 µm to about 3 µm, from about 1.1 µm to about 3 µm, from about 1.2 µm to about 3 µm, from about 1.3 µm to about 3 µm, from about 1.4 µm to about 3 µm, or from about 1.5 µm to about 3 µm, and all ranges and sub-ranges therebetween.

The optical film 120 may exhibit an average hardness of greater than about 5GPa, as measured on the coated surface 101, by indenting that surface with a Berkovitch indenter to form an indent having an indentation depth of at least about 100 nm (measured from the coated surface 101). For example, the optical film 120 may exhibit an average hardness in the range from about 6 GPa to about 30 GPa, from about 7 GPa to about 30 GPa, from about 8 GPa to about 30 GPa, from about 9 GPa to about 30 GPa, from about 10 GPa to about 30 GPa, from about 12 GPa to about 30 GPa, from about 5 GPa to about 28 GPa, from about 5 GPa to about 26 GPa, from about 5 GPa to about 24 GPa, from about 5 GPa to about 22 GPa, from about 5 GPa to about 20 GPa, from about 12 GPa to about 25 GPa, from about 15 GPa to about 25 GPa, from about 16 GPa to about 24 GPa, from about 18 GPa to about 22 GPa and all ranges and sub-ranges therebetween.

The optical film includes an optical interference layer 130 disposed on major surface 112 of the substrate 110, a scratch-resistant layer 140 disposed on the optical interference layer 130 and an optional capping layer 150 disposed on the scratch resistant layer 140. In the embodiment shown, the optical interference layer 130 is disposed between the substrate 110 and the scratch-resistant layer 140, thus modifying the interface between the substrate 110 and the scratch-resistant layer 140.

The optical interference layer 130 includes two or more sub-layers. The two or more sub-layers have different refractive index values. The optical interference layer 130 includes a first low RI sub-layer and a second high RI sub-layer. The difference in the refractive index of the first low RI sub-layer and the second high RI sub-layer may be about 0.01 or greater, 0.05 or greater, 0.1 or greater or even 0.2 or greater.

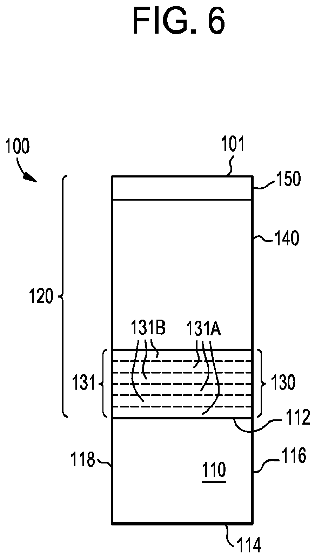

As shown in Figure 6, the optical interference layer may include a plurality of sub-layer sets (131). A single sub-layer set may include a first low RI sub-layer and a second high RI sub-layer. For example, sub-layer set 131 includes a first low RI sub-layer 131A and a second high RI sub-layer 131B. In some embodiments, the optical interference layer may include a plurality of sub-layer sets such that the first low RI sub-layer (designated for illustration as "L") and the second high RI sub-layer (designated for illustration as "H") may be provide the following sequence of sub-layers: L/H/L/H or H/L/H/L, such that the first low RI sub-layer and the second high RI sub-layer appear to alternate along the physical thickness of the optical interference layer. In the example in Figure 6, the optical interference layer 130 includes three sub-layer sets. In some embodiments, the optical interference layer 130 may include up to 10 sub-layer sets. For example, the optical interference layer 130 may include from about 2 to about 12 sub-layer sets, from about 3 to about 8 sub-layer sets, from about 3 to about 6 sub-layer sets.

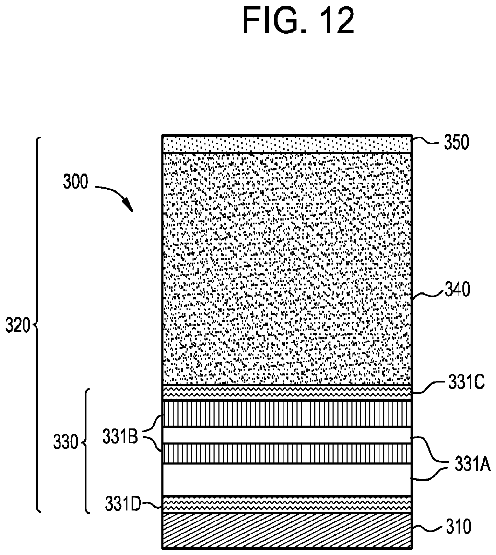

In some embodiments, the optical interference layer may include one or more third sub-layers. The third sub-layer(s) may have a low RI, a high RI or a medium RI. In some embodiments, the third sub-layer(s) may have the same RI as the first low RI sub-layer 131A or the second high RI sub-layer 131B. In other embodiments, the third sub-layer(s) may have a medium RI that is between the RI of the first low RI sub-layer 131A and the RI of the second high RI sub-layer 131B. The third sub-layer(s) may be disposed between the plurality of sub-layer sets and the scratch-resistant layer 140 (see Figure 12, 231C) or between the substrate and the plurality of sub-layer sets (see Figure 12, 231D). Alternatively, the third sub-layer may be included in the plurality of sub-layer sets (not shown). The third sub-layer may be provided in the optical interference layer in the following exemplary configurations: L_{third sub-layer}/H/L/H/L; H_{third sub-layer}/L/H/L/H; L/H/L/H/L_{third sub-layer}; H/L/H/L/H_{third sub-layer}; L_{third sub-layer}/H/L/H/L/H_{third sub-layer}; H_{third sub-layer}/L/H/L/H/L_{third sub-layer}; L_{third sub-layer}/ L/H/L/H; H_{third sub-layer}/ H/L/H/L; H/L/H/ L/L_{third sub-layer}; L/H/L/ H/H_{third sub-layer}; L_{third sub-layer}/L/H/L/H/H_{third sub-layer}; H_{third sub-layer}//H/L/H/L/L_{third sub-layer}; L/M/H/L/M/H; H/M/L/H/M/L; M/L/H/L/M; and other combinations. In these configurations, "L" without any subscript refers to the first low RI sub-layer and "H" without any subscript refers to the second high RI sub-layer. Reference to "Lt_{hird sub-layer} " refers to a third sub-layer having a low RI, "H_{third sub-layer}" refers to a third sub-layer having a high RI and "M" refers to a third sub-layer having a medium RI.

As used herein, the terms "low RI", "high RI" and "medium RI" refer to the relative values for the RI to another (e.g., low RI < medium RI < high RI). In one or more embodiments, the term "low RI" when used with the first low RI sub-layer or with the third sub-layer, includes a range from about 1.3 to about 1.7. In one or more embodiments, the term "high RI" when used with the second high RI sub-layer or with the third sub-layer, includes a range from about 1.6 to about 2.5. In some embodiments, the term "medium RI" when used with the third sub-layer, includes a range from about 1.55 to about 1.8. In some instances, the ranges for low RI, high RI and medium RI may overlap; however, in most instances, the sub-layers of the optical interference layer have the general relationship regarding RI of: low RI < medium RI < high RI.
Exemplary materials suitable for use in the optical interference layer 130 include: SiO₂, Al₂O₃, GeO₂, SiO, AlOxNy, AlN, Si₃N₄, SiOₓN_{y}, SiᵤAlᵥOₓN_{y}, Ta₂O₅, Nb₂O₅, TiO₂, ZrO₂, TiN, MgO, MgF₂, BaF₂,CaF₂, SnO₂, HfO₂, Y₂O₃, MoO₃, DyF₃, YbF₃, YF₃, CeF₃, polymers, fluoropolymers, plasma-polymerized polymers, siloxane polymers, silsesquioxanes, polyimides, fluorinated polyimides, polyetherimide, polyethersulfone, polyphenylsulfone, polycarbonate, polyethylene terephthalate, polyethylene naphthalate, acrylic polymers, urethane polymers, polymethylmethacrylate, other materials cited below as suitable for use in a scratch-resistant layer, and other materials known in the art. Some examples of suitable materials for use in the first low RI sub-layer include SiO₂, Al₂O₃, GeO₂, SiO, AlOₓN_{y}, SiOₓN_{y}, SiᵤAlᵥOₓN_{y}, MgO, MgF₂, BaF₂, CaF₂, DyF₃, YbF₃, YF₃, and CeF₃. Some examples of suitable materials for use in the second high RI sub-layer include SiᵤAlᵥOₓN_{y}, Ta₂O₅, Nb₂O₅, AIN, Si₃N₄, AlOₓN_{y}, SiOₓN_{y}, HfO₂, TiO₂, ZrO₂, Y₂O₃, Al₂O₃, and MoO₃.

In one or more embodiments at least one of the sub-layer(s) of the optical interference layer may include a specific optical thickness range. As used herein, the term "optical thickness" is determined by (n*d), where "n" refers to the RI of the sub-layer and "d" refers to the physical thickness of the sub-layer. Each of the first low RI sub-layers have an optical thickness in the range from 15 nm to 100 nm. Each of the second high RI sub-layers have an optical thickness in the range from 15 nm to 100 nm. In yet other cases, each of the third sub-layers have an optical thickness in the range from about 2 nm to about 200 nm, from about 10 nm to about 100 nm, or from about 15 nm to about 100 nm.

The optical interference layer 130 has a physical thickness of about 800 nm or less. The optical interference layer 130 may have a physical thickness in the range from about 10 nm to about 800 nm, from about 50 nm to about 800 nm, from about 100 nm to about 800 nm, from about 150 nm to about 800 nm, from about 200 nm to about 800 nm, from about 10 nm to about 750 nm, from about 10 nm to about 700 nm, from about 10 nm to about 650 nm, from about 10 nm to about 600 nm, from about 10 nm to about 550 nm, from about 10 nm to about 500 nm, from about 10 nm to about 450 nm, from about 10 nm to about 400 nm, from about 10 nm to about 350 nm, from about 10 nm to about 300 nm, from about 50 to about 300, and all ranges and sub-ranges therebetween.

In some embodiments, the optical interference layer exhibits an average light reflectance of about 2% or less, 1.5% or less, 0.75% or less, 0.5% or less, 0.25% or less, 0.1% or less, or even 0.05% or less over the optical wavelength regime, when measured in an immersed state. As used herein, the phrase "immersed state" includes the measurement of the average reflectance by subtracting or otherwise removing reflections created by the article at interfaces other than those involving the optical interference layer. In some instances, the optical interference layer may exhibit such average light reflectance over other wavelength ranges such as from about 450 nm to about 650 nm, from about 420 nm to about 680 nm, from about 420 nm to about 740 nm, from about 420 nm to about 850 nm, or from about 420 nm to about 950 nm. In some embodiments, the optical interference layer exhibits an average light transmission of about 90% or greater, 92% or greater, 94% or greater, 96% or greater, or 98% or greater, over the optical wavelength regime.

The optical interference layer 130 of the embodiments described herein may be distinguished from layers that have a monotonic refractive index gradient. Articles that include the optical interference layer 130 between a scratch-resistant layer 140 and the substrate 110 exhibit improved optical performance (e.g., high average light transmission, low average light reflectance, low color shift as described herein), while reducing the physical thickness of the optical film 120. Monotonic refractive index gradient layers provide similar optical properties but may require greater physical thicknesses.

The scratch-resistant layer 140 may include an inorganic carbide, nitride, oxide, diamond-like material, or combination of these. Examples of suitable materials for the scratch-resistant layer 140 include metal oxides, metal nitrides, metal oxynitride, metal carbides, metal oxycarbides, and/or combinations thereof combination thereof. Exemplary metals include B, Al, Si, Ti, V, Cr, Y, Zr, Nb, Mo, Sn, Hf, Ta and W. Specific examples of materials that may be utilized in the scratch-resistant layer 140 may include Al₂O₃, AlN, AlOₓN_{y}, Si₃N₄, SiOₓN_{y}, SiᵤAlᵥOₓN_{y}, diamond, diamond-like carbon, SiₓC_{y}, SiₓO_{y}C_{z}, ZrO₂, TiOₓN_{y} and combinations thereof. The scratch resistant layer may also comprise nanocomposite materials, or materials with a controlled microstructure to improve hardness, toughness, or abrasion / wear resistance. For example the scratch resistant layer may comprise nanocrystallites in the size range from about 5 nm to about 30 nm. In embodiments, the scratch resistant layer may comprise transformation-toughened zirconia, partially stabilized zirconia, or zirconia-toughened alumina. In embodiments, the scratch-resistant layer exhibits a fracture toughness value greater than about 1 MPa√m and simultaneously exhibits a hardness value greater than about 8 GPa.

The composition of the scratch-resistant layer 140 may be modified to provide specific properties (e.g., hardness). In one or more embodiments, the scratch-resistant layer 140 exhibits an average hardness in the range from about 5GPa to about 30GPa as measured on a major surface of the scratch-resistant layer, by indenting that surface with a Berkovitch indenter to form an indent having an indentation depth of at least about 100 nm (measured from the major surface of the scratch-resistant layer). In one or more embodiments, the scratch-resistant layer 140 exhibits an average hardness in the range from about 6 GPa to about 30 GPa, from about 7 GPa to about 30 GPa, from about 8 GPa to about 30 GPa, from about 9 GPa to about 30 GPa, from about 10 GPa to about 30 GPa, from about 12 GPa to about 30 GPa, from about 5 GPa to about 28 GPa, from about 5 GPa to about 26 GPa, from about 5 GPa to about 24 GPa, from about 5 GPa to about 22 GPa, from about 5 GPa to about 20 GPa, from about 12 GPa to about 25 GPa, from about 15 GPa to about 25 GPa, from about 16 GPa to about 24 GPa, from about 18 GPa to about 22 GPa and all ranges and sub-ranges therebetween. In one or more embodiments, the scratch-resistant layer 140 may exhibit an average hardness that is greater than 15 GPa, greater than 20 GPa, or greater than 25 GPa. In one or more embodiments, the scratch-resistant layer exhibits an average hardness in the range from about 15 GPa to about 150 GPa, from about 15 GPa to about 100 GPa, or from about 18 GPa to about 100 GPa.

The physical thickness of the scratch-resistant layer 140 may be in the range from about 1.5 µm to about 3 µm. In some embodiments, the physical thickness of the scratch-resistant layer 140 may be in the range from about 1.5 µm to about 3 µm, from about 1.5 µm to about 2.8 µm, from about 1.5 µm to about 2.6 µm, from about 1.5 µm to about 2.4 µm, from about 1.5 µm to about 2.2 µm, from about 1.5 µm to about 2 µm, from about 1.6 µm to about 3 µm, from about 1.7 µm to about 3 µm, from about 1.8 µm to about 3 µm, from about 1.9 µm to about 3 µm, from about 2 µm to about 3 µm, from about 2.1 µm to about 3 µm, from about 2.2 µm to about 3 µm, from about 2.3 µm to about 3 µm, and all ranges and sub-ranges therebetween. In some embodiments, the physical thickness of the scratch-resistant layer 140 may be in the range from about 0.1 µm to about 2 µm, or from about 0.1 µm to about 1 µm, or from 0.2 µm to about 1 µm.

In one or more embodiments, the scratch-resistant layer 140 has a refractive index of about 1.6 or greater. In some instances, the refractive index of the scratch-resistant layer 140 may be about 1.65 or greater, 1.7 or greater, 1.8 or greater, 1.9 or greater, 2 or greater, or 2.1 or greater. The scratch-resistant layer may have a refractive index that is greater than the refractive index of the substrate 110. In specific embodiments, the scratch-resistant layer has a refractive index that is about 0.05 index units greater or about 0.2 index units greater than the refractive index of the substrate, when measured at a wavelength of about 550 nm.

The capping layer 150 comprises SiO₂ and/or SiOₓN_{y}. The capping layer 150 of one or more embodiments may include a low refractive index material, such as Al₂O₃, GeO₂, SiO, AlOₓN_{y}, SiᵤAl_{y}OₓN_{y}, MgO, MgF₂, BaF₂, CaF₂, DyF₃, YbF₃, YF₃, and CeF₃ and other such materials. The physical thickness of the capping layer may be in the range from about 0 to about 100 nm, from about 0.1 nm to about 50 nm, from about 1 nm to about 50 nm, from about 5 nm to about 50 nm, from about 10 nm to about 50 nm, from about 0 nm to about 40, from about 0 nm to about 30, from about 0 nm to about 20 nm, from about 0 nm to about 10 nm, from about 0.1 nm to about 15 nm, from about 0.1 nm to about 12 nm, from about 0.1 nm to about 10 nm, from about 0.1 nm to about 8 nm, from about 4 nm to about 30 nm, from about 4 nm to about 20 nm, from about 8 nm to about 12 nm, from about 9 nm to about 10 nm, and all ranges and sub-ranges therebetween. In one or more embodiments, the article has a refractive index of about 1.7 or greater at the coated surface 101, which may include the capping layer. The capping layer 150 may formed using silane-based low-friction materials, including fluorosilane, alkyl silane, silsesquioxane, and the like, either by liquid deposition or vapor deposition methods. In one or more embodiments, the capping layer may comprise two or more materials or two or more sub-layers (e.g., 4 sub-layers or 6 sub-layers). The capping layer may provide an antireflective function especially where multiple sub-layers are utilized. The sub-layers may include different refractive indices and may include layers with high refractive indices (H) and low refractive indices (L) where "high" and "low" are with respect to one another and within known ranges for antireflective films. The sub-layers may be arranged so that high and low refractive index sub-layers alternate. The materials or sub-layers can include, for example SiO₂ or SiOₓN_{y}. In such embodiments, the one or more sub-layers can have a thickness each or combined in the range from about 4 nm to about 50 nm. In some embodiments, the capping layer 150 may include a silane-based low-friction sub-layer having a thickness in the range from about 0.1 nm to about 20 nm, disposed on underlying sub-layers of the capping layer (e.g., the SiO₂ and/or SiOₓN_{y} layer(s)).

In some embodiments, the optical interference layer 130 may also comprise a crack mitigating layer. This crack mitigating layer may suppress or prevent crack bridging between the scratch resistant layer 140 and the substrate 110, thus modifying or improving the mechanical properties or strength of the article. Embodiments of crack mitigating layers are further described in U.S. Patent Application Nos. 14/052,055, 14/053,093 and 14/053139. The crack mitigating layer may comprise crack blunting materials, crack deflecting materials, crack arresting materials, tough materials, or controlled-adhesion interfaces. The crack mitigating layer may comprise polymeric materials, nanoporous materials, metal oxides, metal fluorides, metallic materials, or other materials mentioned herein for use in either the optical interference layer 130 or the scratch resistant layer 140. The structure of the crack mitigating layer may be a multilayer structure, wherein the multilayer structure is designed to deflect, suppress, or prevent crack propagation while simultaneously providing the optical interference benefits described herein. The crack mitigating layer may include nanocrystallites, nanocomposite materials, transformation toughened materials, multiple layers of organic material, multiple layers of inorganic material, multiple layers of interdigitating organic and inorganic materials, or hybrid organic-inorganic materials. The crack mitigating layer may have a strain to failure that is greater than about 2%, or greater than about 10%. These crack mitigating layers can also be combined separately with the substrate, scratch resistant layer, and optical interference layer(s) described herein; it is not strictly required that the crack mitigating layer is simultaneously acting as an optical interference layer. In embodiments, the crack mitigating layer can perform its function in the presence or in the absence of an optical interference layer (and vice versa). The design of the optical interference layer can be adjusted, if needed, to accommodate the presence of a crack mitigating layer.

The crack mitigating layer may include tough or nanostructured inorganics, for example, zinc oxide, certain Al alloys, Cu alloys, steels, or stabilized tetragonal zirconia (including transformation toughened, partially stabilized, yttria stabilized, ceria stabilized, calcia stabilized, and magnesia stabilized zirconia); zirconia-toughened ceramics (including zirconia toughened alumina); ceramic-ceramic composites; carbon-ceramic composites; fiber- or whisker-reinforced ceramics or glass-ceramics (for example, SiC or Si₃N₄ fiber- or whisker- reinforced ceramics); metal-ceramic composites; porous or non-porous hybrid organic-inorganic materials, for example, nanocomposites, polymer-ceramic composites, polymer-glass composites, fiber-reinforced polymers, carbon-nanotube- or graphene-ceramic composites, silsesquioxanes, polysilsesquioxanes, or "ORMOSILs" (organically modified silica or silicate), and/or a variety of porous or non-porous polymeric materials, for example siloxanes, polysiloxanes, polyacrylates, polyacrylics, PI (polyimides), fluorinated polyimide, polyamides, PAI (polyamideimides), polycarbonates, polysulfones, PSU or PPSU (polyarylsulfones), fluoropolymers, fluoroelastomers, lactams, polycylic olefins, and similar materials, including, but not limited to PDMS (polydimethylsiloxane), PMMA (poly(methyl methacrylate)), BCB (benzocyclobutene), PEI (polyethyletherimide), poly(arylene ethers) such as PEEK (poly-ether-ether-ketone), PES (polyethersulfone) and PAR (polyarylate) , PET (polyethylene terephthalate), PEN (polyethylene napthalate = poly(ethylene-2,6-napthalene dicarboxylate), FEP (fluorinated ethylene propylene), PTFE (polytetrafluoroethylene), PFA (perfluroalkoxy polymer, e.g., trade names Teflon^{®}, Neoflon^{®}) and similar materials. Other suitable materials include modified polycarbonates, some versions of epoxies, cyanate esters, PPS (polyphenylsulfides), polyphenylenes, polypyrrolones, polyquinoxalines, and bismaleimides.

The physical and/or optical thicknesses of the layers of the optical film 120 can be adjusted to achieve desired optical and mechanical properties (e.g., hardness). For example, the scratch-resistant layer 140 may be can be made thinner, for example in the range from about 100 nm to about 500 nm, while still providing some resistance to scratch, abrasion, or damage events (including drop events of the article onto hard surfaces such as asphalt, cement, or sandpaper). The capping layer physical and/or optical thickness can also be adjusted. The capping layer may be included when even lower total reflection is desired. The capping layer may also be included to further tune color of the article. For example, the optical films described herein minimize color shift with changing incidence illumination angle in a* or b* coordinates, but may also exhibit a slight slope to the reflectance spectra. A capping layer 150 may be included in the optical film 120 and the physical and/or optical thickness of the capping layer may be adjusted slightly (e.g., from about 10 nm to about 14 nm) to provide an even flatter reflectance spectrum (or a reflectance spectrum with oscillations having even smaller amplitudes) across the optical wavelength regime.

The optical film 120 may be formed using various deposition methods such as vacuum deposition techniques, for example, chemical vapor deposition (e.g., plasma enhanced chemical vapor deposition, low-pressure chemical vapor deposition, atmospheric pressure chemical vapor deposition, and plasma-enhanced atmospheric pressure chemical vapor deposition), physical vapor deposition (e.g., reactive or nonreactive sputtering or laser ablation), thermal or e-beam evaporation and/or atomic layer deposition. One or more layers of the optical film 120 may include nano-pores or mixed-materials to provide specific refractive index ranges or values.

The physical thicknesses of the layers or sub-layers of the optical film 120 may vary by less than about 10 nm, less than about 5 nm, less than about 1 nm or less than about 0.5 nm (representing the range of six standard deviations from the target value) to achieve the maximum targeted repeatability (e.g., a* and b* variations no greater than +/- 0.2 for reflected F2 illumination). In some embodiments, larger variations in physical thicknesses of the layers can be tolerated while still achieving the desired targets of the invention for some applications (e.g., a* and b* variations no greater than +/- 2.0 for reflected F2 illumination).

High-angle optical performance may be improved in some embodiments by adding additional layers to the optical film 120 and/or the article 100. In some cases, these additional layers can extend the wavelengths at which the reflectance spectrum has low amplitude oscillations (e.g., into the near-IR wavelengths, such as to 800 nm, 900 nm, or even 1000 nm). This leads to lower oscillations and lower color at high incidence angles, because generally the entire reflectance spectra of the article shifts to shorter wavelengths at higher light incidence angles. In some cases, this extended-band performance can be achieved by adjusting the interference layer design, for example by allowing a higher oscillation amplitude to achieve a wider-wavelength-band of low oscillations, without necessarily adding more layers. This extended-band or wide-wavelength-band of low oscillations (correlated to an extended band of low reflectance for the interference layers) can also be useful in making the article tolerant to deposition non-uniformity, substrate curvature, substrate sculpting, or substrate shaping which causes shadowing during directional deposition processes, or other geometry factors that cause a substantially uniform relative shift in all layer thicknesses relative to the typically ideal target thicknesses.

### Examples

Various embodiments will be further clarified by the following examples. Examples 1-9 used modeling to understand the reflectance spectra and color shift of articles that included an optical film with an optical interference layer, a scratch-resistant layer and a capping layer. The modeling was based on collected refractive index data from formed layers of various materials and a strengthened aluminoborosilicate ("ABS") glass substrate. Examples 10, 11, and Comparative Example 12 are experimentally fabricated multilayer working examples which further demonstrate the principles of modeling Examples 1-9.

The layers were formed by DC reactive sputtering, reactive DC and radio frequency (RF) sputtering, and e-beam evaporation onto silicon wafers. Some of the formed layers included SiO₂, Nb₂O₃, or Al₂O₃ and were deposited onto silicon wafers by DC reactive sputtering from a silicon, niobium or aluminum target (respectively) at a temperature of about 50 °C using ion assist. Layers formed in this manner are designated with the indicator "RS". Other layers including SiO₂ were deposited onto silicon wafers by e-beam evaporation by heating the wafer to 300 °C and without ion assist. Such layers are designated with the indicator "E". Layers of Ta₂O₅ were deposited onto silicon wafers by e-beam evaporation by heating the wafer to 300 °C and without ion assist.

Layers of SiᵤAlᵥOₓN_{y} were deposited onto silicon wafers by DC reactive sputtering combined with RF superimposed DC sputtering, with ion assist using a sputter deposition tool supplied by AJA-Industries. The wafer was heated to 200 °C during deposition and silicon targets having a 3 inch diameter and an aluminum targets having a 3 inch diameter were used. Reactive gases used included nitrogen and oxygen and argon was used as the inert gas. The RF power was supplied to the silicon target at 13.56 Mhz and DC power was supplied to the aluminum target. The resulting SiᵤAlᵥOₓN_{y} layers had a refractive index at 550 nm of about 1.95 and a measured hardness of greater than about 15 GPa, using a Berkovitch indenter on the surface of the SiᵤAlᵥOₓN_{y} layer being tested, as described herein.

The refractive indices (as a function of wavelength) of the formed layers of the optical film and the glass substrates were measured using spectroscopic ellipsometry. Tables 1-7 include the refractive indices and dispersion curves measured. The refractive indices thus measured were then used to calculate reflectance spectra and angular color shift for the various modeled Examples.

**Table 1: Refractive indices and dispersion curve for a RS-SiO2 layer vs. wavelength.**

| **Material** | **SiO2-RS** | |
|---|---|---|
| Wavelength (nm) | Refractive Index (n) | Extinction Coefficient (k) |
| 246.5 | 1.52857 | 0.0 |
| 275.2 | 1.51357 | 0.0 |
| 300.8 | 1.50335 | 0.0 |
| 324.7 | 1.49571 | 0.0 |
| 350.2 | 1.48911 | 0.0 |
| 375.8 | 1.48374 | 0.0 |
| 399.7 | 1.47956 | 0.0 |
| 425.2 | 1.47583 | 0.0 |
| 450.7 | 1.47269 | 0.0 |
| 476.3 | 1.47002 | 0.0 |
| 500.2 | 1.46788 | 0.0 |
| 525.7 | 1.46589 | 0.0 |
| 549.5 | 1.46427 | 0.0 |
| 575.0 | 1.46276 | 0.0 |
| 600.5 | 1.46143 | 0.0 |
| 625.9 | 1.46026 | 0.0 |
| 649.7 | 1.45928 | 0.0 |
| 675.1 | 1.45835 | 0.0 |
| 700.5 | 1.45751 | 0.0 |
| 725.9 | 1.45676 | 0.0 |
| 751.3 | 1.45609 | 0.0 |
| 775.0 | 1.45551 | 0.0 |
| 800.4 | 1.45496 | 0.0 |
| 850.9 | 1.45399 | 0.0 |
| 899.8 | 1.45320 | 0.0 |
| 950.2 | 1.45252 | 0.0 |
| 999.0 | 1.45195 | 0.0 |
| 1100.0 | 1.45100 | 0.0 |
| 1199.6 | 1.45028 | 0.0 |
| 1302.0 | 1.44971 | 0.0 |
| 1400.8 | 1.44928 | 0.0 |
| 1499.7 | 1.44892 | 0.0 |
| 1599.0 | 1.44863 | 0.0 |
| 1688.4 | 1.44841 | 0.0 |

**Table 2: Refractive indices and dispersion curve for a SiᵤAlᵥOₓN_{y} layer vs. wavelength.**

| **Material** | **SiAlON-195** | |
|---|---|---|
| Wavelength (nm) | Refractive Index (n) | Extinction Coefficient (k) |
| 206.6 | 2.37659 | 0.21495 |
| 225.4 | 2.28524 | 0.11270 |
| 251.0 | 2.18818 | 0.04322 |
| 275.5 | 2.12017 | 0.01310 |
| 300.9 | 2.06916 | 0.00128 |
| 324.6 | 2.03698 | 0.0 |
| 350.2 | 2.01423 | 0.0 |
| 360.4 | 2.00718 | 0.0 |
| 371.2 | 2.00059 | 0.0 |
| 380.3 | 1.99562 | 0.0 |
| 389.9 | 1.99090 | 0.0 |
| 400.0 | 1.98640 | 0.0 |
| 410.5 | 1.98213 | 0.0 |
| 421.7 | 1.97806 | 0.0 |
| 430.5 | 1.97513 | 0.0 |
| 439.7 | 1.97230 | 0.0 |
| 449.2 | 1.96958 | 0.0 |
| 459.2 | 1.96695 | 0.0 |
| 469.6 | 1.96441 | 0.0 |
| 480.6 | 1.96197 | 0.0 |
| 492.0 | 1.95961 | 0.0 |
| 499.9 | 1.95808 | 0.0 |
| 512.3 | 1.95586 | 0.0 |
| 520.9 | 1.95442 | 0.0 |
| 529.9 | 1.95301 | 0.0 |
| 539.1 | 1.95165 | 0.0 |
| 548.6 | 1.95031 | 0.0 |
| 558.5 | 1.94900 | 0.0 |
| 568.7 | 1.94773 | 0.0 |
| 579.4 | 1.94649 | 0.0 |
| 590.4 | 1.94528 | 0.0 |
| 601.9 | 1.94410 | 0.0 |
| 613.8 | 1.94295 | 0.0 |
| 619.9 | 1.94239 | 0.0 |
| 632.6 | 1.94128 | 0.0 |
| 639.1 | 1.94074 | 0.0 |
| 652.6 | 1.93968 | 0.0 |
| 666.6 | 1.93864 | 0.0 |
| 681.2 | 1.93763 | 0.0 |
| 696.5 | 1.93665 | 0.0 |
| 712.6 | 1.93569 | 0.0 |
| 729.3 | 1.93477 | 0.0 |
| 746.9 | 1.93386 | 0.0 |
| 765.3 | 1.93299 | 0.0 |
| 784.7 | 1.93214 | 0.0 |
| 805.1 | 1.93131 | 0.0 |
| 826.6 | 1.93051 | 0.0 |
| 849.2 | 1.92973 | 0.0 |
| 873.1 | 1.92898 | 0.0 |
| 898.4 | 1.92825 | 0.0 |
| 925.3 | 1.92754 | 0.0 |
| 953.7 | 1.92686 | 0.0 |
| 999.9 | 1.92587 | 0.0 |
| 1050.7 | 1.92494 | 0.0 |
| 1107.0 | 1.92406 | 0.0 |
| 1169.7 | 1.92323 | 0.0 |
| 1239.8 | 1.92245 | 0.0 |
| 1319.0 | 1.92172 | 0.0 |
| 1408.9 | 1.92103 | 0.0 |
| 1512.0 | 1.92040 | 0.0 |
| 1631.4 | 1.91981 | 0.0 |
| 1771.2 | 1.91926 | 0.0 |
| 1999.8 | 1.91861 | 0.0 |

**Table 3: Refractive indices and dispersion curve for a strengthened aluminoborosilicate glass substrate vs. wavelength.**

| **Material** | **ABS glass** | |
|---|---|---|
| Wavelength (nm) | Refractive Index (n) | Extinction Coefficient (k) |
| 350.6 | 1.53119 | 0.0 |
| 360.7 | 1.52834 | 0.0 |
| 370.8 | 1.52633 | 0.0 |
| 380.8 | 1.52438 | 0.0 |
| 390.9 | 1.52267 | 0.0 |
| 400.9 | 1.52135 | 0.0 |
| 411.0 | 1.52034 | 0.0 |
| 421.0 | 1.51910 | 0.0 |
| 431.1 | 1.51781 | 0.0 |
| 441.1 | 1.51686 | 0.0 |
| 451.2 | 1.51600 | 0.0 |
| 461.2 | 1.51515 | 0.0 |
| 471.2 | 1.51431 | 0.0 |
| 481.3 | 1.51380 | 0.0 |
| 491.3 | 1.51327 | 0.0 |
| 501.3 | 1.51259 | 0.0 |
| 511.4 | 1.51175 | 0.0 |
| 521.4 | 1.51124 | 0.0 |
| 531.4 | 1.51082 | 0.0 |
| 541.5 | 1.51040 | 0.0 |
| 551.5 | 1.50999 | 0.0 |
| 561.5 | 1.50959 | 0.0 |
| 571.5 | 1.50918 | 0.0 |
| 581.6 | 1.50876 | 0.0 |
| 591.6 | 1.50844 | 0.0 |
| 601.6 | 1.50828 | 0.0 |
| 611.6 | 1.50789 | 0.0 |
| 621.7 | 1.50747 | 0.0 |
| 631.7 | 1.50707 | 0.0 |
| 641.7 | 1.50667 | 0.0 |
| 651.7 | 1.50629 | 0.0 |
| 661.7 | 1.50591 | 0.0 |
| 671.8 | 1.50555 | 0.0 |
| 681.8 | 1.50519 | 0.0 |
| 691.8 | 1.50482 | 0.0 |
| 701.8 | 1.50445 | 0.0 |
| 709.8 | 1.50449 | 0.0 |
| 719.8 | 1.50456 | 0.0 |
| 729.9 | 1.50470 | 0.0 |
| 739.9 | 1.50484 | 0.0 |
| 749.9 | 1.50491 | 0.0 |

**Table 4: Refractive indices and dispersion curve for a RS-Al₂O₃ layer vs. wavelength.**

| **Material** | **Al2O3-RS** | |
|---|---|---|
| Wavelength (nm) | Refractive Index (n) | Extinction Coefficient (k) |
| 251.3 | 1.76256 | 0.0 |
| 275.2 | 1.74075 | 0.0 |
| 300.8 | 1.72358 | 0.0 |
| 324.7 | 1.71136 | 0.0 |
| 350.2 | 1.70121 | 0.0 |
| 375.8 | 1.69321 | 0.0 |
| 401.3 | 1.68679 | 0.0 |
| 425.2 | 1.68185 | 0.0 |
| 450.7 | 1.67747 | 0.0 |
| 474.7 | 1.67402 | 0.0 |
| 500.2 | 1.67089 | 0.0 |
| 525.7 | 1.66823 | 0.0 |
| 549.5 | 1.66608 | 0.0 |
| 575.0 | 1.66408 | 0.0 |
| 600.5 | 1.66234 | 0.0 |
| 625.9 | 1.66082 | 0.0 |
| 649.7 | 1.65955 | 0.0 |
| 675.1 | 1.65835 | 0.0 |
| 700.5 | 1.65728 | 0.0 |
| 725.9 | 1.65633 | 0.0 |
| 749.7 | 1.65552 | 0.0 |
| 775.0 | 1.65474 | 0.0 |
| 800.4 | 1.65404 | 0.0 |
| 850.9 | 1.65282 | 0.0 |
| 899.8 | 1.65184 | 0.0 |
| 950.2 | 1.65098 | 0.0 |
| 999.0 | 1.65027 | 0.0 |
| 1100.0 | 1.64909 | 0.0 |
| 1199.6 | 1.64821 | 0.0 |
| 1302.0 | 1.64751 | 0.0 |
| 1400.8 | 1.64698 | 0.0 |
| 1499.7 | 1.64654 | 0.0 |
| 1599.0 | 1.64619 | 0.0 |
| 1688.4 | 1.64592 | 0.0 |

**Table 5: Refractive indices and dispersion curve for an E-Ta₂O₅ layer vs. wavelength.**

| **Material** | **Ta2O5-E** | |
|---|---|---|
| Wavelength (nm) | Refractive Index (n) | Extinction Coefficient (k) |
| 299.5 | 2.31978 | 0.01588 |
| 310.0 | 2.27183 | 0.00049 |
| 319.5 | 2.23697 | 0.0 |
| 329.7 | 2.20688 | 0.0 |
| 340.6 | 2.18080 | 0.0 |
| 350.2 | 2.16164 | 0.0 |
| 360.4 | 2.14448 | 0.0 |
| 369.0 | 2.13201 | 0.0 |
| 380.3 | 2.11780 | 0.0 |
| 389.9 | 2.10741 | 0.0 |
| 399.9 | 2.09780 | 0.0 |
| 410.5 | 2.08888 | 0.0 |
| 421.7 | 2.08059 | 0.0 |
| 430.5 | 2.07475 | 0.0 |
| 439.7 | 2.06920 | 0.0 |
| 449.2 | 2.06394 | 0.0 |
| 459.2 | 2.05892 | 0.0 |
| 469.6 | 2.05415 | 0.0 |
| 480.6 | 2.04960 | 0.0 |
| 488.1 | 2.04669 | 0.0 |
| 499.9 | 2.04248 | 0.0 |
| 512.3 | 2.03846 | 0.0 |
| 520.9 | 2.03588 | 0.0 |
| 529.8 | 2.03337 | 0.0 |
| 539.1 | 2.03094 | 0.0 |
| 548.6 | 2.02857 | 0.0 |
| 558.5 | 2.02627 | 0.0 |
| 568.7 | 2.02403 | 0.0 |
| 579.4 | 2.02186 | 0.0 |
| 590.4 | 2.01974 | 0.0 |
| 601.9 | 2.01768 | 0.0 |
| 613.8 | 2.01567 | 0.0 |
| 619.9 | 2.01469 | 0.0 |
| 632.6 | 2.01276 | 0.0 |
| 645.8 | 2.01088 | 0.0 |
| 659.5 | 2.00905 | 0.0 |
| 673.8 | 2.00726 | 0.0 |
| 688.8 | 2.00552 | 0.0 |
| 704.5 | 2.00382 | 0.0 |
| 729.3 | 2.00135 | 0.0 |
| 746.9 | 1.99975 | 0.0 |
| 774.9 | 1.99743 | 0.0 |
| 805.1 | 1.99518 | 0.0 |
| 826.6 | 1.99372 | 0.0 |
| 849.2 | 1.99230 | 0.0 |
| 898.4 | 1.98955 | 0.0 |
| 953.7 | 1.98692 | 0.0 |
| 999.9 | 1.98502 | 0.0 |
| 1050.7 | 1.98318 | 0.0 |
| 1107.0 | 1.98140 | 0.0 |
| 1148.0 | 1.98024 | 0.0 |
| 1192.2 | 1.97910 | 0.0 |
| 1239.8 | 1.97799 | 0.0 |
| 1291.5 | 1.97690 | 0.0 |
| 1347.7 | 1.97584 | 0.0 |
| 1408.9 | 1.97479 | 0.0 |
| 1476.0 | 1.97376 | 0.0 |
| 1549.8 | 1.97276 | 0.0 |

**Table 6: Refractive indices and dispersion curve for an E-SiO₂ layer vs. wavelength.**

| **Material** | **SiO2-E** | |
|---|---|---|
| Wavelength (nm) | Refractive Index (n) | Extinction Coefficient (k) |
| 299.5 | 1.48123 | 0.00296 |
| 310.0 | 1.47856 | 0.00283 |
| 319.5 | 1.47636 | 0.00273 |
| 329.7 | 1.47424 | 0.00262 |
| 340.6 | 1.47221 | 0.00252 |
| 350.2 | 1.47057 | 0.00244 |
| 360.4 | 1.46899 | 0.00236 |
| 369.0 | 1.46776 | 0.00229 |
| 380.3 | 1.46628 | 0.00221 |
| 389.9 | 1.46513 | 0.00215 |
| 399.9 | 1.46401 | 0.00209 |
| 410.5 | 1.46292 | 0.00203 |
| 421.7 | 1.46187 | 0.00197 |
| 430.5 | 1.46110 | 0.00192 |
| 439.7 | 1.46035 | 0.00188 |
| 449.2 | 1.45961 | 0.00183 |
| 459.2 | 1.45890 | 0.00179 |
| 469.6 | 1.45820 | 0.00174 |
| 480.6 | 1.45752 | 0.00170 |
| 488.1 | 1.45708 | 0.00167 |
| 499.9 | 1.45642 | 0.00163 |
| 512.3 | 1.45579 | 0.00158 |
| 520.9 | 1.45537 | 0.00156 |
| 529.8 | 1.45497 | 0.00153 |
| 539.1 | 1.45457 | 0.00150 |
| 548.6 | 1.45418 | 0.00147 |
| 558.5 | 1.45379 | 0.00144 |
| 568.7 | 1.45341 | 0.00142 |
| 579.4 | 1.45304 | 0.00139 |
| 590.4 | 1.45268 | 0.00136 |
| 601.9 | 1.45233 | 0.00133 |
| 613.8 | 1.45198 | 0.00131 |
| 619.9 | 1.45181 | 0.00129 |
| 632.6 | 1.45147 | 0.00126 |
| 639.1 | 1.45130 | 0.00125 |
| 652.5 | 1.45098 | 0.00122 |
| 659.5 | 1.45082 | 0.00121 |
| 673.8 | 1.45050 | 0.00118 |
| 681.2 | 1.45035 | 0.00117 |
| 688.8 | 1.45019 | 0.00116 |
| 704.5 | 1.44989 | 0.00113 |
| 720.8 | 1.44960 | 0.00110 |
| 746.9 | 1.44917 | 0.00106 |
| 774.9 | 1.44876 | 0.00102 |
| 805.1 | 1.44836 | 0.00098 |
| 826.6 | 1.44811 | 0.00096 |
| 849.2 | 1.44786 | 0.00093 |
| 898.4 | 1.44738 | 0.00088 |
| 953.7 | 1.44693 | 0.00083 |
| 999.9 | 1.44661 | 0.00079 |
| 1050.7 | 1.44631 | 0.00075 |
| **1107.0** | 1.44602 | 0.00071 |
| 1148.0 | 1.44584 | 0.00068 |
| 1192.2 | 1.44566 | 0.00066 |
| 1239.8 | 1.44549 | 0.00063 |
| 1291.5 | 1.44533 | 0.00061 |
| 1347.7 | 1.44517 | 0.00058 |
| 1408.9 | 1.44502 | 0.00056 |
| 1476.0 | 1.44488 | 0.00053 |
| 1549.8 | 1.44474 | 0.00050 |

**Table 7: Refractive indices and dispersion curve for an RS-Nb₂O₅ layer vs. wavelength.**

| **Material** | **Nb2O5-RS** | |
|---|---|---|
| Wavelength (nm) | Refractive Index (n) | Extinction Coefficient (k) |
| 206.6 | 2.04389 | 0.66079 |
| 250.0 | 2.32991 | 1.05691 |
| 300.2 | 3.14998 | 0.45732 |
| 325.0 | 2.94490 | 0.12012 |
| 350.2 | 2.74715 | 0.02027 |
| 375.1 | 2.62064 | 0.00048 |
| 400.6 | 2.53696 | 0.0 |
| 425.3 | 2.48169 | 0.0 |
| 450.0 | 2.44210 | 0.0 |
| 475.0 | 2.41223 | 0.0 |
| 500.9 | 2.38851 | 0.0 |
| 525.4 | 2.37086 | 0.0 |
| 549.8 | 2.35647 | 0.0 |
| 575.3 | 2.34409 | 0.0 |
| 600.4 | 2.33392 | 0.0 |
| 624.6 | 2.32557 | 0.0 |
| 650.8 | 2.31779 | 0.0 |
| 675.7 | 2.31142 | 0.0 |
| 700.5 | 2.30583 | 0.0 |
| 725.1 | 2.30093 | 0.0 |
| 749.1 | 2.29665 | 0.0 |
| 774.9 | 2.29255 | 0.0 |
| 799.9 | 2.28898 | 0.0 |
| 849.2 | 2.28288 | 0.0 |
| 901.7 | 2.27749 | 0.0 |
| 999.9 | 2.26958 | 0.0 |
| 1102.1 | 2.26342 | 0.0 |
| 1203.7 | 2.25867 | 0.0 |
| 1298.3 | 2.25513 | 0.0 |
| 1400.9 | 2.25198 | 0.0 |
| 1502.8 | 2.24939 | 0.0 |
| 1599.8 | 2.24730 | 0.0 |
| 1698.4 | 2.24547 | 0.0 |
| 1796.9 | 2.24389 | 0.0 |
| 1892.9 | 2.24254 | 0.0 |
| 1999.7 | 2.24122 | 0.0 |
| 2066.4 | 2.24047 | 0.0 |

### EXAMPLE 1

Modeled Example 1 included an article having the same structure as shown in Figure 6. Modeled Example 1 included a chemically strengthened alkali aluminoborosilicate glass substrate and an optical film disposed on the substrate. The optical film included an optical interference layer with three sets of sub-layers, a scratch-resistant layer disposed on the optical interference layer and a capping layer disposed on the scratch-resistant layer. The optical film materials and thicknesses of each layer, in the order arranged in the optical film, are provided in Table 8.

**Table 8: Optical film attributes for modeled Example 1.**

| Layer | | Material | Modeled Physical Thickness |
|---|---|---|---|
| Ambient medium | | Air | Immersed |
| Capping layer | | RS-SiO₂ | 9.5 nm |
| Scratch-resistant layer | | SiᵤAlᵥOₓN_{y} | **2000** nm |
| Optical interference layer | 1^{st} low RI sub-layer | RS-SiO₂ | 8.22 nm |
| | 2^{nd} high RI sub-layer | SiᵤAlᵥOₓN_{y} | 46.39 nm |
| | 1^{st} low RI sub-layer | RS-SiO₂ | 29 nm |
| | 2^{nd} high RI sub-layer | SiᵤAlᵥOₓN_{y} | 27.87 nm |
| | 1^{st} low RI sub-layer | RS-SiO₂ | 49.63 nm |
| | 2^{nd} high RI sub-layer | SiᵤAlᵥOₓN_{y} | 9.34 nm |
| Substrate | | ABS Glass | Immersed |

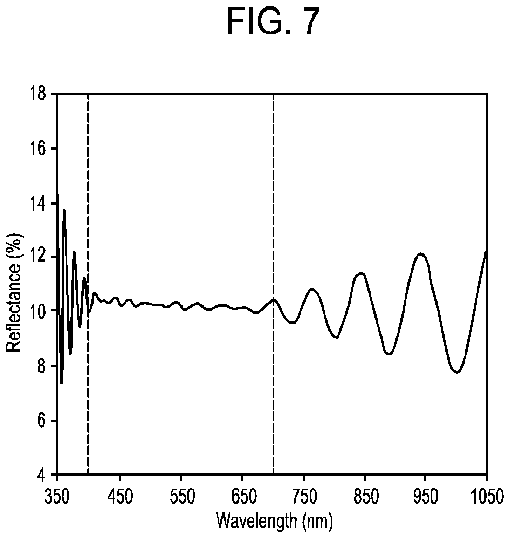

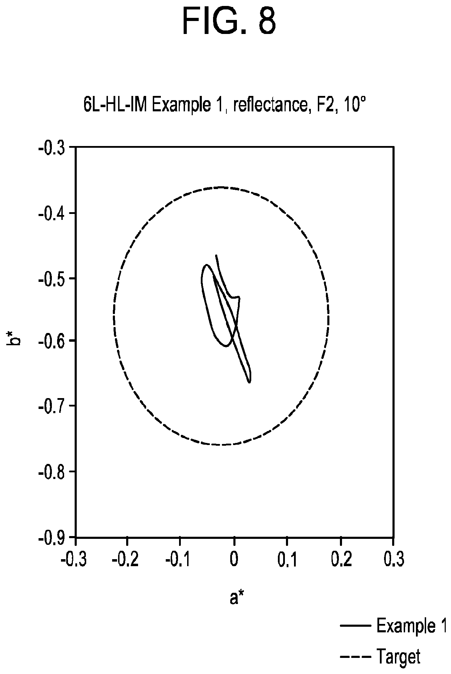

The calculated reflectance spectrum for modeled Example 1 is shown in Figure 7. As shown in Figure 7, the oscillations in the reflectance spectrum are small (i.e., less than about 0.5 percentage points over the optical wavelength regime), leading to relatively low calculated visible color shift for a 10 degree observer, over a range of incidence viewing angles from 60 degrees to normal incidence, under an F2 illuminant, as shown in Figure 8. Figure 7 shows a target having a radius of 0.2, centered on the color coordinates of the substrate without the optical film disposed thereon, under F2 illumination.

### EXAMPLE 2

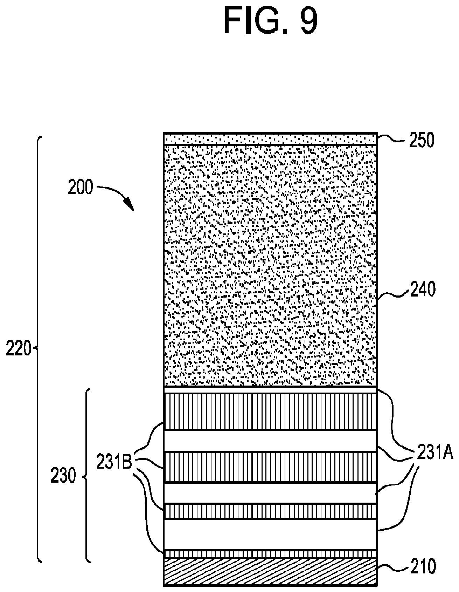

Modeled Example 2 included an article 200 with a chemically strengthened alkali aluminoborosilicate substrate 210 and an optical film 220 disposed on the substrate. The optical film 220 included an optical interference layer 230, a scratch-resistant layer 240 disposed on the optical interference layer, and a capping layer 250, as shown in Figure 9. The optical interference layer 230 included four sets of sub-layers 231A, 231B. The optical film materials and thicknesses of each layer, in the order arranged in the optical film, are provided in Table 9.

**Table 9: Optical film attributes for modeled Example 2.**

| Layer | | Material | Modeled Thickness |
|---|---|---|---|
| Ambient medium | | Air | Immersed |
| Capping layer | | RS-SiO₂ | 9.5 nm |
| Scratch-resistant layer | | SiᵤAlᵥOₓN_{y} | **2000** nm |
| Optical interference layer | 1^{st} low RI sub-layer | RS-SiO₂ | 4.83 nm |
| | 2^{nd} high RI sub-layer | SiᵤAlᵥOₓN_{y} | 53.16 nm |
| | 1^{st} low RI sub-layer | RS-SiO₂ | 19.63 nm |
| | 2^{nd} high RI sub-layer | SiᵤAlᵥOₓN_{y} | 38.29 nm |
| | 1^{st} low RI sub-layer | RS-SiO₂ | 40.97 nm |
| | 2^{nd} high RI sub-layer | SiᵤAlᵥOₓN_{y} | 21.73 nm |
| | 1^{st} low RI sub-layer | RS-SiO₂ | 54.88 nm |
| | 2^{nd} high RI sub-layer | SiᵤAlᵥOₓN_{y} | 7.05nm |
| Substrate | | ABS Glass | Immersed |

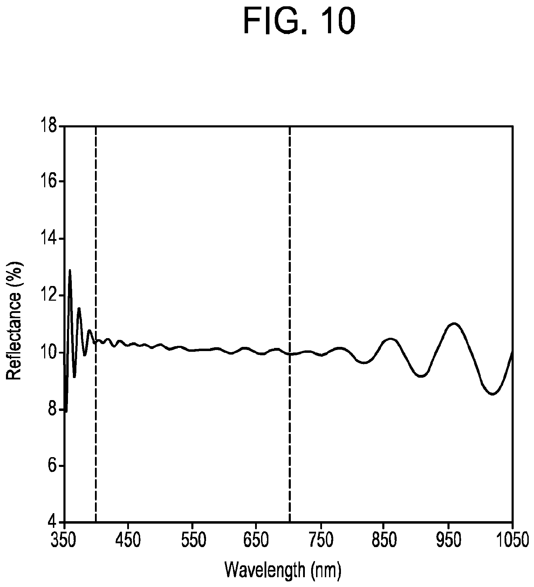

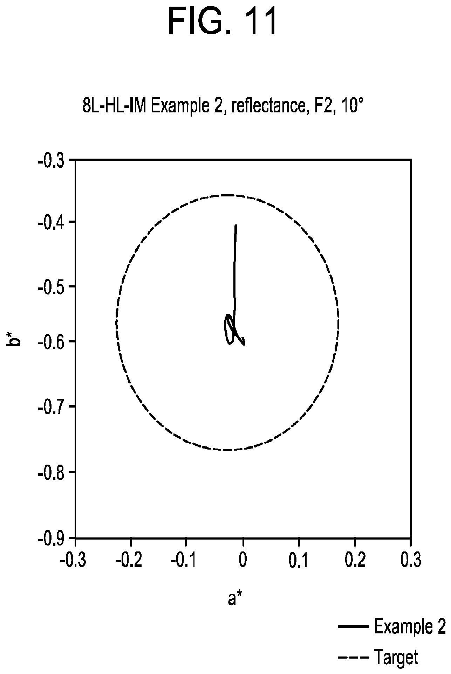

The calculated reflectance spectrum for the modeled Example 2 is shown in Figure 10. As shown in Figure 10, the oscillations in the reflectance spectrum are small (i.e., less than about 0.5 percentage points over the optical wavelength regime), leading to relatively low calculated visible color shift for a 10 degree observer, over a range of incidence viewing angles from 60 degrees to normal incidence, under an F2 illuminant, as shown in Figure 11. Figure 11 shows a target having a radius of 0.2, centered on the color coordinates of the substrate without the optical film disposed thereon, under F2 illumination.

### EXAMPLE 3

Modeled Example 3 included an article 300 with a chemically strengthened alkali aluminoborosilicate substrate 310 and an optical film 320 disposed on the substrate. The optical film 320 included an optical interference layer 330, a scratch resistant layer 340 disposed on the optical interference layer, and a capping layer 350 disposed on the scratch-resistant layer 250. The optical interference layer included two sets of sub-layers 331A, 331B, a third sub-layer 331C disposed between the plurality of sub-layers and the scratch-resistant layer, and a third sub-layer 331D disposed between the plurality of sub-layers and the substrate, as shown in Figure 12. The optical film materials and thicknesses of each layer, in the order arranged in the optical film, are provided in Table 10.

**Table 10: Optical film attributes for modeled Example 3.**

| Layer | | Material | Modeled Thickness |
|---|---|---|---|
| Ambient medium | | Air | Immersed |
| Capping layer | | RS-SiO₂ | 9.5 nm |
| Scratch-resistant layer | | SiᵤAlᵥOₓN_{y} | **2000** nm |
| Optical interference layer | Third sub-layer | RS-Al₂O₃ | 13.5 nm |
| | 2^{nd} high RI sub-layer | SiᵤAlᵥOₓN_{y} | 43.58 nm |
| | 1^{st} low RI sub-layer | RS-SiO₂ | 28.85 nm |
| | 2^{nd} high RI sub-layer | SiᵤAlᵥOₓN_{y} | 27.48 nm |
| | 1^{st} low RI sub-layer | RS-SiO₂ | 40.62 nm |
| | Third sub-layer | RS-Al₂O₃ | 27.26 nm |
| Substrate | | ABS Glass | Immersed |

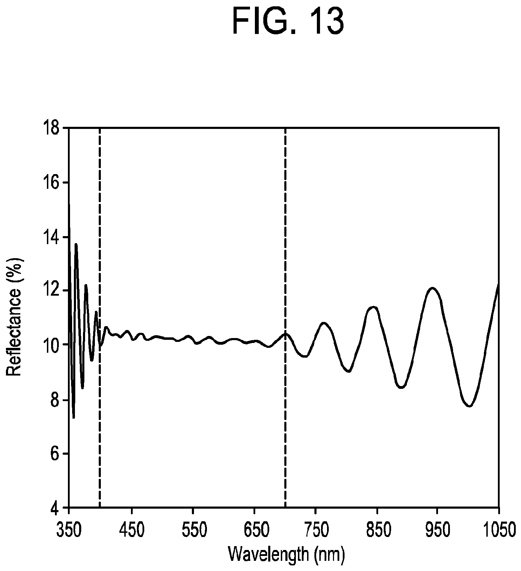

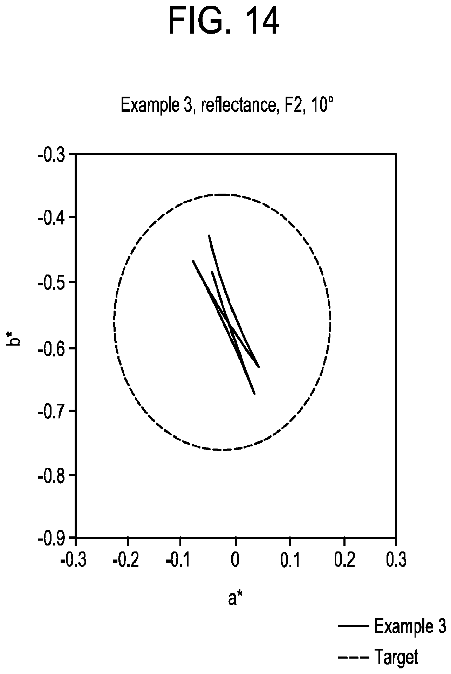

The calculated reflectance spectrum for the modeled Example 3 is shown in Figure 13. As shown in Figure 13, the oscillations in the reflectance spectrum are small (i.e., less than about 0.5 percentage points over the optical wavelength regime), leading to relatively low calculated visible color shift for a 10 degree observer, over a range of incidence viewing angles from 60 degrees to normal incidence, under an F2 illuminant, as shown in Figure 14. Figure 14 shows a target having a radius of 0.2, centered on the color coordinates of the substrate without the optical film disposed thereon, under F2 illumination.

### EXAMPLE 4

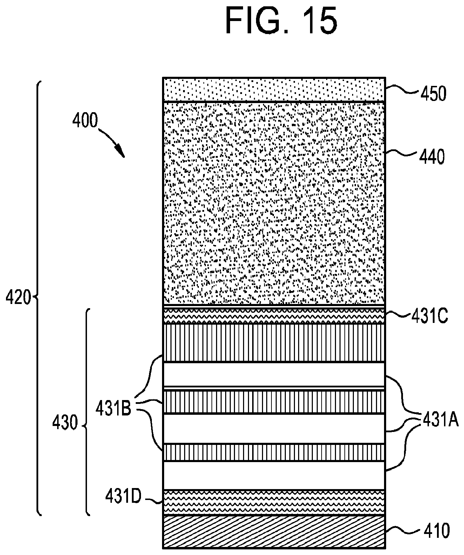

Modeled Example 4 included an article 400 with a chemically strengthened alkali aluminoborosilicate substrate 410 and an optical film 420 disposed on the substrate. The optical film 420 included an optical interference layer 430, a scratch resistant layer 440 disposed on the optical interference layer, and a capping layer 450 disposed on the scratch-resistant layer. The optical interference layer included three sets of sub-layers 431A, 431B, a third sub-layer 431C disposed between the plurality of sub-layers and the scratch-resistant layer, and a third sub-layer 431D disposed between the plurality of sub-layers and the substrate, as shown in Figure 15. The optical film materials and thicknesses of each layer, in the order arranged in the optical film, are provided in Table 11.

**Table 11: Optical film attributes for modeled Example 4.**

| Layer | | Material | Modeled Thickness |
|---|---|---|---|
| Ambient medium | | Air | Immersed |
| Capping layer | | RS-SiO₂ | 9.5 nm |
| Scratch-resistant layer | | SiᵤAlᵥOₓN_{y} | **2000** nm |
| Optical interference layer | Third sub-layer | RS-Al₂O₃ | 10.20 nm |
| | 2^{nd} high RI sub-layer | SiᵤAlᵥOₓN_{y} | 49.01 nm |
| | 1^{st} low RI sub-layer | RS-SiO₂ | 23.30 nm |
| | 2^{nd} high RI sub-layer | SiᵤAlᵥOₓN_{y} | 35.04 nm |
| | 1^{st} low RI sub-layer | RS-SiO₂ | 44.95 nm |
| | 2^{nd} high RI sub-layer | SiᵤAlᵥOₓN_{y} | 19.02 nm |
| | 1^{st} low RI sub-layer | RS-SiO₂ | 50.45 nm |
| | Third sub-layer | RS-Al₂O₃ | 17.16 nm |
| Substrate | | ABS Glass | Immersed |

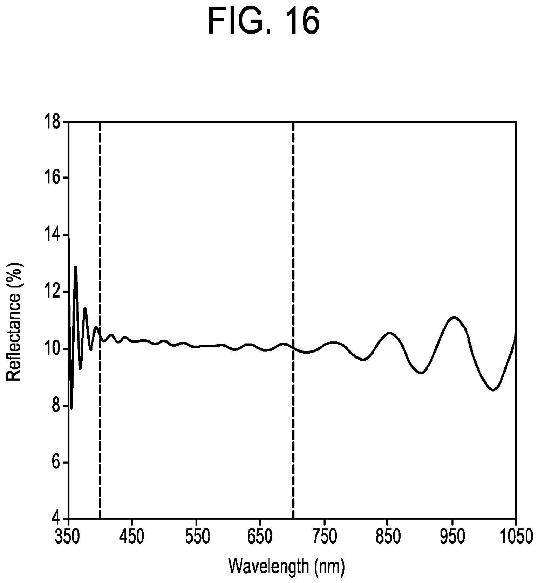

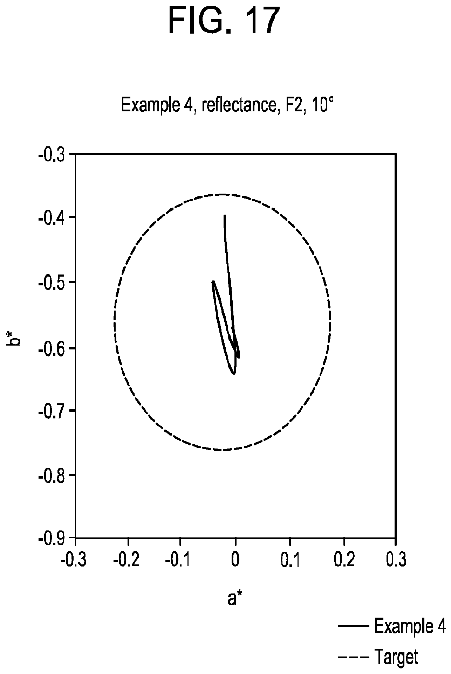

The calculated reflectance spectrum for the modeled Example 4 is shown in Figure 16. As shown in Figure 16, the oscillations in the reflectance spectrum are small (i.e., less than about 0.5 percentage points over the optical wavelength regime), leading to relatively low calculated visible color shift for a 10 degree observer, over a range of incidence viewing angles from 60 degrees to normal incidence, under an F2 illuminant, as shown in Figure 17. Figure 17 shows a target having a radius of 0.2, centered on the color coordinates of the substrate without the optical film disposed thereon, under F2 illumination.

### EXAMPLE 5

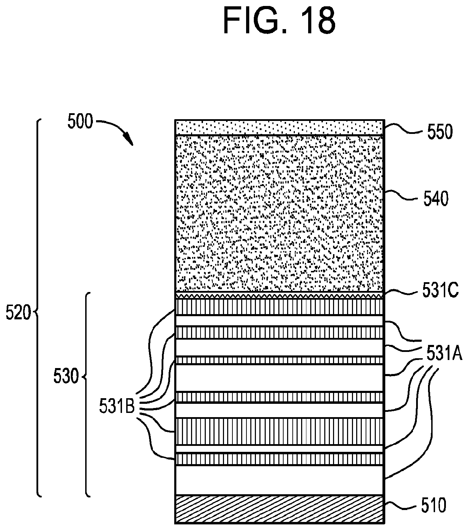

Modeled Example 5 included an article 500 with a chemically strengthened alkali aluminoborosilicate substrate 510 and an optical film 520 disposed on the substrate. The optical film 520 included an optical interference layer 530, a scratch resistant layer 540 disposed on the optical interference layer, and a capping layer 550 disposed on the scratch-resistant layer 550. The optical interference layer included six sets of sub-layers 531A, 531B and a third sub-layer 531C disposed between the plurality of sub-layers and the scratch-resistant layer, as shown in Figure 18. The optical film materials and thicknesses of each layer, in the order arranged in the optical film, are provided in Table 12.

**Table 12: Optical film attributes for modeled Example 5.**

| Layer | | Material | Modeled Thickness |
|---|---|---|---|
| Ambient medium | | Air | Immersed |
| Capping layer | | RS-SiO₂ | 14 nm |
| Scratch-resistant layer | | SiᵤAlᵥOₓN_{y} | **2000** nm |
| Optical interference layer | Third sub-layer | RS-Al₂O₃ | 7.05 nm |
| | 2^{nd} high RI sub-layer | SiᵤAlᵥOₓN_{y} | 54.65 nm |
| | 1^{st} low RI sub-layer | RS-Al₂O₃ | 24.59 nm |
| | 2^{nd} high RI sub-layer | SiᵤAlᵥOₓN_{y} | 37.96 nm |
| | 1^{st} low RI sub-layer | RS-Al₂O₃ | 52.53 nm |
| | 2^{nd} high RI sub-layer | SiᵤAlᵥOₓN_{y} | 17.48 nm |
| | 1^{st} low RI sub-layer | RS-Al₂O₃ | 90.07 nm |
| | 2^{nd} high RI sub-layer | SiᵤAlᵥOₓN_{y} | 20.63 nm |
| | 1^{st} low RI sub-layer | RS-Al₂O₃ | 38.15 nm |
| | 2^{nd} high RI sub-layer | SiᵤAlᵥOₓN_{y} | 84.11 nm |
| | 1^{st} low RI sub-layer | RS-Al₂O₃ | 6.87 nm |
| | 2^{nd} high RI sub-layer | SiᵤAlᵥOₓN_{y} | 48.85 nm |
| | 1^{st} low RI sub-layer | RS-Al₂O₃ | 81.63 nm |
| Substrate | | ABS Glass | Immersed |

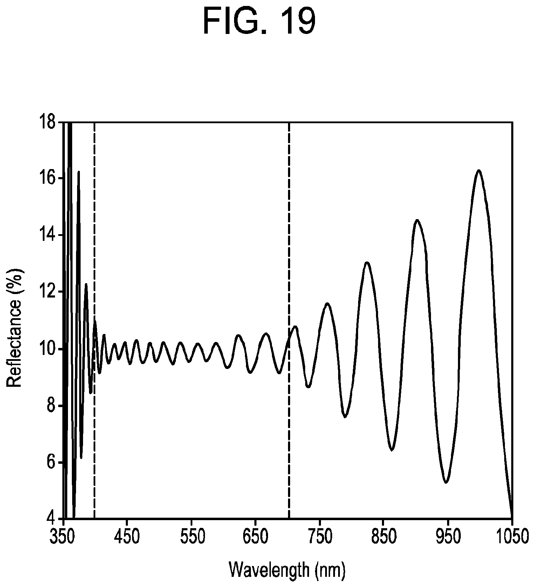

The calculated reflectance spectrum for the modeled Example 5 is shown in Figure 19. As shown in Figure 19, the oscillations in the reflectance spectrum are small (i.e., less than about 1 percentage point over the optical wavelength regime), which would lead to a relatively low visible color shift when viewed at an incidence viewing angle in the range from about 0 degrees to about 60 degrees to normal incidence, under an illuminant.

### EXAMPLE 6

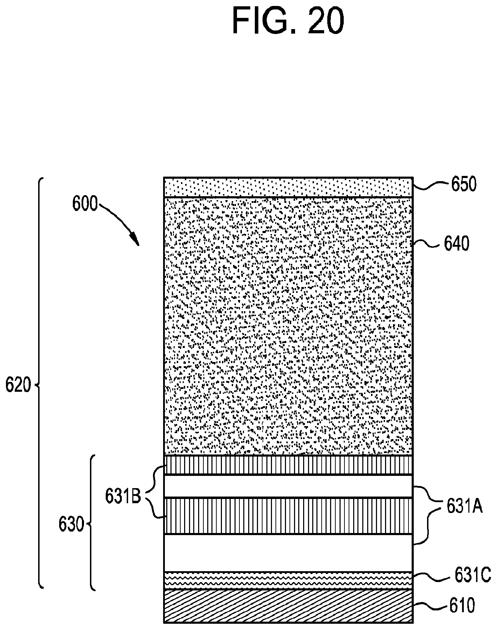

Modeled Example 6 included an article 600 with a chemically strengthened alkali aluminoborosilicate substrate 610 and an optical film 620 disposed on the substrate. The optical film 620 included an optical interference layer 630, a scratch resistant layer 640 disposed on the optical interference layer, and a capping layer 650 disposed on the scratch-resistant layer 650. The optical interference layer included two sets of sub-layers 631A, 631B and a third sub-layer 631C disposed between the plurality of sub-layers and the substrate, as shown in Figure 20. The optical film materials and thicknesses of each layer, in the order arranged in the optical film, are provided in Table 13.

**Table 13: Optical film attributes for modeled Example 6.**

| Layer | | Material | Modeled Thickness |
|---|---|---|---|
| Ambient medium | | Air | Immersed |
| Capping layer | | RS-SiO₂ | 10 nm |
| Scratch-resistant layer | | SiᵤAlᵥOₓN_{y} | **2000** nm |
| Optical interference layer | 2^{nd} high RI sub-layer | E-Ta₂O₅ | 15.27 nm |
| | 1^{st} low RI sub-layer | E-SiO₂ | 19.35 nm |
| | 2^{nd} high RI sub-layer | E-Ta₂O₅ | 32.53 nm |
| | 1^{st} low RI sub-layer | E-SiO₂ | 43.18 nm |
| | Third sub-layer | E-Ta₂O₅ | 12.64 nm |
| Substrate | | ABS Glass | Immersed |

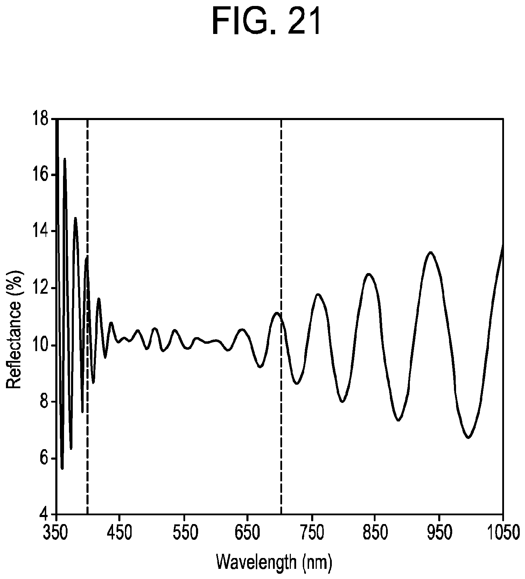

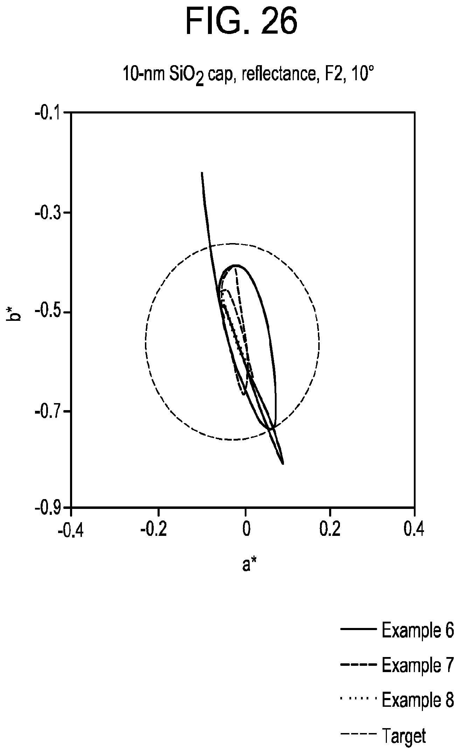

The calculated reflectance spectrum for the modeled Example 6 is shown in Figure 21. As shown in Figure 21, the oscillations in the reflectance spectrum are small (i.e., less than about 1 percentage point over the optical wavelength regime), leading to relatively low calculated visible color shift for a 10 degree observer, over a range of incidence viewing angles from 60 degrees to normal incidence, under an F2 illuminant, as shown in Figure 26. Figure 26 shows a target having a radius of 0.2, centered on the color coordinates of the substrate without the optical film disposed thereon, under F2 illumination.

### EXAMPLE 7

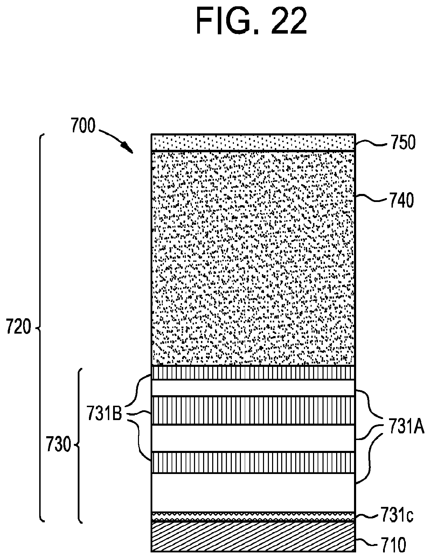

Modeled Example 7 included an article 700 with a chemically strengthened alkali aluminoborosilicate substrate 710 and an optical film 720 disposed on the substrate. The optical film 720 included an optical interference layer 730, a scratch resistant layer 740 disposed on the optical interference layer, and a capping layer 750 disposed on the scratch-resistant layer 750. The optical interference layer included three sets of sub-layers 731A, 731B, and a third sub-layer 731C between the plurality of sub-layers and the substrate, as shown in Figure 22. The optical film materials and thicknesses of each layer, in the order arranged in the optical film, are provided in Table 14.

**Table 14: Optical film attributes for modeled Example 7.**

| Layer | | Material | Modeled Thickness |
|---|---|---|---|
| Ambient medium | | Air | Immersed |
| Capping layer | | RS-SiO₂ | 10 nm |
| Scratch-resistant layer | | SiᵤAlᵥOₓN_{y} | **2000** nm |
| Optical interference layer | 2^{nd} high RI sub-layer | E-Ta₂O₅ | 18.67 nm |
| | 1^{st} low RI sub-layer | E-SiO₂ | 13.7 nm |
| | 2^{nd} high RI sub-layer | E-Ta₂O₅ | 39.23 nm |
| | 1^{st} low RI sub-layer | E-SiO₂ | 32.77 nm |
| | 2^{nd} high RI sub-layer | E-Ta₂O₅ | 24.91 nm |
| | 1^{st} low RI sub-layer | E-SiO₂ | **50.89** nm |
| | Third sub-layer | E-Ta₂O₅ | 8.39 nm |
| Substrate | | ABS Glass | Immersed |

The calculated reflectance spectrum for the modeled Example 7 is shown in Figure 22. As shown in Figure 22, the oscillations in the reflectance spectrum are small (i.e., less than about 0.5 percentage points over the optical wavelength regime and, in some cases, less than about 0.1 percentage points over the optical wavelength regime), leading to relatively low calculated visible color shift for a 10 degree observer, over a range of incidence viewing angles from 60 degrees to normal incidence, under an F2 illuminant, as shown in Figure 26.

### EXAMPLE 8

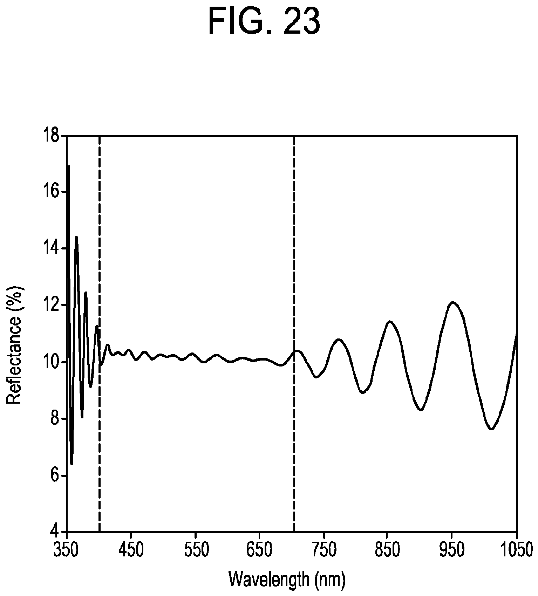

Modeled Example 8 included an article 800 with a chemically strengthened alkali aluminoborosilicate substrate 810 and an optical film 820 disposed on the substrate. The optical film 820 included an optical interference layer 830, a scratch resistant layer 840 disposed on the optical interference layer, and a capping layer 850 disposed on the scratch-resistant layer 840. The optical interference layer included four sets of sub-layers 831A, 831B, and a third sub-layer 831C disposed between the plurality of sub-layers and the scratch-resistant layer, as shown in Figure 23. The optical film materials and thicknesses of each layer, in the order arranged in the optical film, are provided in Table 15.

**Table 15: Optical film attributes for modeled Example 8.**

| Layer | | Material | Modeled Thickness |
|---|---|---|---|
| Ambient medium | | Air | Immersed |
| Capping layer | | RS-SiO₂ | 10 nm |
| Scratch-resistant layer | | SiᵤAlᵥOₓN_{y} | **2000** nm |
| Optical interference layer | Third sub-layer | E-Ta₂O₅ | 19.52 nm |
| | 1^{st} low RI sub-layer | E-SiO₂ | 11.28 nm |
| | 2^{nd} high RI sub-layer | E-Ta₂O₅ | 44.68 nm |
| | 1^{st} low RI sub-layer | E-SiO₂ | 25.72 nm |
| | 2^{nd} high RI sub-layer | E-Ta₂O₅ | 34.69 nm |
| | 1^{st} low RI sub-layer | E-SiO₂ | 45.76 nm |
| | 2^{nd} high RI sub-layer | E-Ta₂O₅ | 20.24 nm |
| | 1^{st} low RI sub-layer | E-SiO₂ | 57.29 nm |
| | 2^{nd} high sub-layer | E-Ta₂O₅ | 6.64 nm |
| Substrate | | ABS Glass | Immersed |

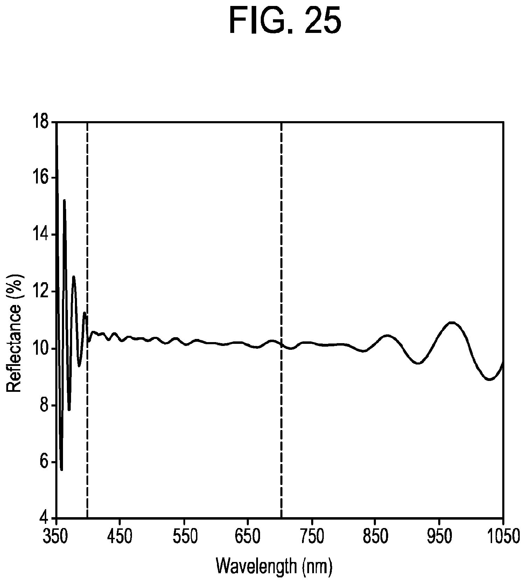

The calculated reflectance spectrum for the modeled Example 8 is shown in Figure 25. As shown in Figure 25, the oscillations in the reflectance spectrum are small (i.e., less than about 0.25 percentage points over the optical wavelength regime and, in some cases, less than about 0.1 percentage points over the optical wavelength regime), leading to relatively low calculated visible color shift for a 10 degree observer, over a range of incidence viewing angles from 60 degrees to normal incidence, under an F2 illuminant, as shown in Figure 26.

### EXAMPLE 9

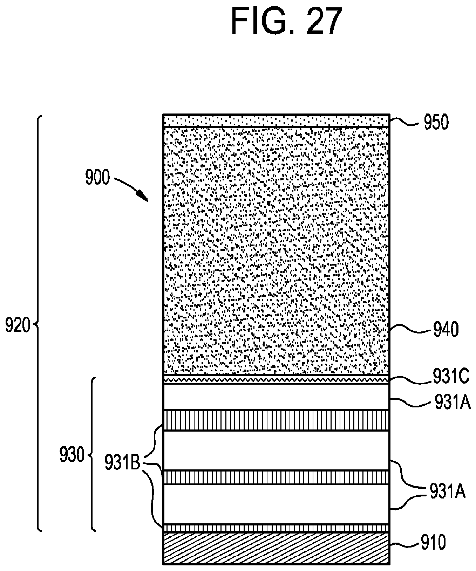

Modeled Example 9 included an article 900 with a chemically strengthened alkali aluminoborosilicate substrate 910 and an optical film 920 disposed on the substrate. The optical film 920 included an optical interference layer 930, a scratch resistant layer 940 disposed on the optical interference layer, and a capping layer 950 disposed on the scratch-resistant layer 950. The optical interference layer included three sets of sub-layers 931A, 931B, and a third sub-layer 931C between the plurality of sub-layers and the scratch-resistant layer, as shown in Figure 27. The optical film materials and thicknesses of each layer, in the order arranged in the optical film, are provided in Table 16.

**Table 16: Optical film attributes for modeled Example 9.**

| Layer | | Material | Modeled Thickness |
|---|---|---|---|
| Ambient medium | | Air | Immersed |
| Capping layer | | RS-SiO₂ | 14 nm |
| Scratch-resistant layer | | SiᵤAlᵥOₓN_{y} | **2000** nm |
| Optical interference layer | Third sub-layer | RS-Nb₂O₅ | 7.0 nm |
| | 1^{st} low RI sub-layer | RS-SiO₂ | 23.02 nm |
| | 2^{nd} high RI sub-layer | RS-Nb₂O₅ | 19.75 nm |
| | 1^{st} low RI sub-layer | RS-SiO₂ | 41.60 nm |
| | 2^{nd} high RI sub-layer | RS-Nb₂O₅ | 14.68 nm |
| | 1^{st} low RI sub-layer | RS-SiO₂ | 57.14 nm |
| | 2^{nd} high sub-layer | RS-Nb₂O₅ | 5.08 nm |
| Substrate | | ABS Glass | Immersed |

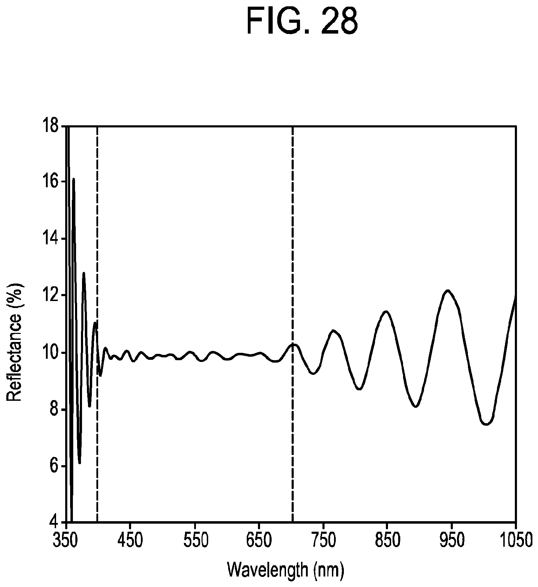

The calculated reflectance spectrum for the modeled Example 9 is shown in Figure 28. As shown in Figure 28, the oscillations in the reflectance spectrum are small (i.e., less than about 1 percentage points over the optical wavelength regime and, in some cases, less than about 0.1 percentage points over the optical wavelength regime), which would lead to a relatively low visible color shift at an incidence viewing angle in the range from about 0 degrees to about 60 degrees to normal incidence, under an illuminant.

### EXAMPLES 10-11 AND COMPARATIVE EXAMPLE 12

Example 10 was made and included a substrate, and an optical film disposed on the substrate. The substrate included a chemically strengthened ABS glass substrate having a compressive stress of about 900 MPa and a DOL of about 45 µm. As shown in Table 17, the optical film included an optical interference layer with six sub-layer sets. The six sub-layer sets included first low RI sub-layer of SiOxNy (having a refractive index value of about 1.49 at a wavelength of about 550 nm) and a second high RI sub-layer of AlOₓN_{y} (having a refractive index value of about 2.0 at a wavelength of about 550 nm). The optical film also included an AlOₓN_{y} scratch resistant layer. The optical interference layer of Example 10 was formed using reactive magnetron sputtering using an AJA-Industries sputter deposition tool using oxidizing and nitridizing environments. Sputter targets used included a 3" diameter silicon target and a 3" diameter aluminum target.

The first low RI layer was formed by supplying about 490 W RF to the silicon target. During formation of the first low RI layer, about 75 W RF and 50 W DC were supplied to the aluminum target; however, the aluminum shutter was closed to prevent deposition of aluminum. During deposition of the first low RI sub-layers, oxygen was flowed into the reactor at a flow rate of about 3.3 sccm, argon was flowed into the reactor at a flow rate of about 30 sccm and nitrogen gas was flowed into the reactor at a flow rate of about 30 sccm. The deposition times for the first low RI sub-layers were modified to provide the thicknesses shown in Tables 17 and 18.

The second high RI sub-layers were disposed using RF superimposed DC power directed at the aluminum target. About 300 W of DC power was supplied to the aluminum target and about 200 W of RF power was supplied to the Al target. During formation of the second high RI layer, RF power was supplied to the silicon target at about 50 W; however, the silicon shutter was closed to prevent deposition of silicon. During deposition of the second high RI sub-layers, oxygen was flowed into the reactor at a flow rate of 0.25 sccm, argon was flowed into the reactor at a flow rate of about 30 sccm and nitrogen gas was flowed into the rector at a rate of about 30 sccm. The deposition times for the second high RI sub-layers were modified to provide the thicknesses shown in Tables 17 and 18.

Table 17 also provides the refractive index values for the respective first low RI sub-layers, second high RI sub-layers and the scratch-resistant layer, at a wavelength of about 550 nm. The entire dispersion curves for these sub-layers are similar to analogous materials used in Modeled Examples 1-9 (whose refractive index dispersions were also measured experimentally). Dispersion curves used in Modeled Examples 1-9 can be shifted up or down slightly by a linear or scaled amount at each wavelength to arrive at the target refractive indices used in Examples 10 and 11 to very closely reproduce the actual dispersion curves of the materials in working Examples 10 and 11.

At each of the transitions between the first low RI sub-layers (SiOxNy) and the second high RI sub-layers (AlOxNy), both the silicon and aluminum shutters were closed for about 60 seconds, as the gas flows were transitioned to those required for the following sub-layer. During this transition, the powers and gas flows were adjusted The sputtering was maintained "on" but the sputtered material went onto the closed shutter. The power supplied to the silicon target was left at about 500 W in some cases to scavenge remnant oxygen, since the second high RI sub-layer utilized a low oxygen flow (as compared to the oxygen flow used to form the first low RI sub-layer). This process allowed the sputter targets to attain their desired powers, in the presence of the gases that were used for the various layers, prior to opening the shutters for a given sub-layer.

The scratch-resistant layer was formed using the same conditions as used to form the second high RI sub-layers. The resulting scratch-resistant layer combined with the optical interference layers as described exhibited a hardness of about 15 GPa, as measured using a Berkovitch indenter as described herein and a modulus of about 212 GPa as measured by known nanoindentation methods.

**Table 17. Optical film target refractive indices and thicknesses for Example 10.**

| Layer | Material | Target Refractive Index @550nm | Target Thickness (nm) |
|---|---|---|---|
| Scratch-resistant layer | AlOₓN_{y} | 2.00709 | 2000 |
| First low RI sub-layer | SiOₓN_{y} | 1.49658 | 9.7 |
| Second high RI sub-layer | AlOₓN_{y} | 2.00709 | 42.17 |
| First low RI sub-layer | SiOₓN_{y} | 1.49658 | 30.27 |
| Second high RI sub-layer | AlOₓN_{y} | 2.00709 | 24.68 |
| First low RI sub-layer | SiOₓN_{y} | 1.49658 | 52.71 |
| Second high RI sub-layer | AlOₓN_{y} | 2.00709 | 8.25 |
| Substrate | ABS glass | 1.51005 | |

**Table 18. Sputtering process conditions used for Example 10.**

| Layer | Material | Sputter Time (sec) | Si W RF | Si shutter | Al W RF | Al W DC | Al shutter | O₂ flow | Ar flow | N₂ flow |
|---|---|---|---|---|---|---|---|---|---|---|
| Scratch-resistant layer | AlOₓN_{y} | 32756.6 | 50 | closed | 200 | 300 | open | 3.3 | 30 | 30 |
| First low RI sub-layer | SiOₓN_{y} | 121.9 | 490 | open | 75 | 50 | closed | 0.25 | 30 | 30 |
| Second high RI sub-layer | AlOₓN_{y} | 710.3 | 50 | closed | 200 | 300 | open | 3.3 | 30 | 30 |
| First low RI sub-layer | SiOₓN_{y} | 448.3 | 490 | open | 75 | 50 | closed | 0.25 | 30 | 30 |
| Second high RI sub-layer | AlOₓN_{y} | 440.6 | 50 | closed | 200 | 300 | open | 3.3 | 30 | 30 |
| First low RI sub-layer | SiOₓN_{y} | 804.2 | 490 | open | 75 | 50 | closed | 0.25 | 30 | 30 |
| Second high RI sub-layer | AlOₓN_{y} | 104.3 | 50 | closed | 200 | 300 | open | 3.3 | 30 | 30 |
| Substrate | ABS glass | | | | | | | | | |

| | | | | | | | | | | |
|---|---|---|---|---|---|---|---|---|---|---|
| Total 35523.0 Time: | | | | | | | | | | |

Example 11 was formed using the same equipment and similar reactive sputtering processes as Example 10; however Example 11 included SiᵤAl_{y}OₓN_{y} in the second high RI sub-layers and as the scratch resistant layer, which had a refractive index at a wavelength of about 550nm of about 1.998. The same substrate was used in Example 11 as was used in Example 10. The optical film design for Example 11 and sputtering process conditions used to form Example 11 are shown in Tables 19 and 20.

Example 11 was measured for hardness using a Berkovitch diamond indenter and an indentation depth of about 100nm, as described herein, and the article of Exhibit 11 had a measured hardness of 21 GPa. Example 11 also exhibited an elastic modulus of 237 GPa.

**Table 19: Optical film target refractive indices and thicknesses for Example 11.**

| Layer | Material | Target Refractive Index @550nm | Target Thickness (nm) |
|---|---|---|---|
| Scratch-resistant layer | SiᵤAlᵥOₓN_{y} | 1.99823 | 2000 |
| First low RI sub-layer | SiOₓN_{y} | 1.49594 | 11.8 |
| Second high RI sub-layer | SiᵤAlᵥOₓN_{y} | 1.99823 | 45.4 |
| First low RI sub-layer | SiOₓN_{y} | 1.49594 | 33.6 |
| Second high RI sub-layer | SiᵤAlᵥOₓN_{y} | 1.99823 | 27.5 |
| First low RI sub-layer | SiOₓN_{y} | 1.49594 | 56.5 |
| Second high RI sub-layer | SiᵤAlᵥOₓN_{y} | 1.99823 | 10.1 |
| Substrate | ABS glass | 1.51005 | |

**Table 20. Sputtering process conditions for Example 11.**

| Layer | Material | Sputter Time (sec) | Si W RF | Si shutter | Al W RF | Al W DC | Al shutter | O2 flow | Ar flow | N2 flow |
|---|---|---|---|---|---|---|---|---|---|---|
| Scratch-resistant layer | SiᵤAlᵥOₓN_{y} | 18340.0 | 500 | open | 200 | 300 | open | 3.3 | 30 | 30 |
| First low RI sub-layer | SiOₓN_{y} | 135.0 | 500 | open | 50 | 50 | closed | 0.5 | 30 | 30 |
| Second high RI sub-layer | SiᵤAl_{y}OₓN_{y} | 440.0 | 500 | open | 200 | 300 | open | 3.3 | 30 | 30 |
| First low RI sub-layer | SiOₓN_{y} | 385.0 | 500 | open | 50 | 50 | closed | 0.5 | 30 | 30 |
| Second high RI sub-layer | SiᵤAlᵥOₓN_{y} | 275.0 | 500 | open | 200 | 300 | open | 3.3 | 30 | 30 |
| First low RI sub-layer | SiOₓN_{y} | 640.0 | 500 | open | 50 | 50 | closed | 0.5 | 30 | 30 |
| Second high RI sub-layer | SiᵤAlᵥOₓN_{y} | 195.0 | 500 | open | 200 | 300 | open | 3.3 | 30 | 30 |
| Substrate | ABS glass | | | | | | | | | |
| | Total time: | 20410.0 | | | | | | | | |

Comparative Example 12 was formed using the same substrate as Examples 10 and 11, but film disposed on the substrate was formed by reactive sputtering using a Shincron rotary drum coater. The film of Comparative Example 12 included a single optical interference layer disposed between a scratch-resistant layer and the glass substrate. Comparative Example 12 included the following structure: glass substrate / 115nm optical interference layer of Al₂O₃ / 2000nm scratch-resistant layer of AlOₓN_{y} / 32nm capping layer of SiO₂.

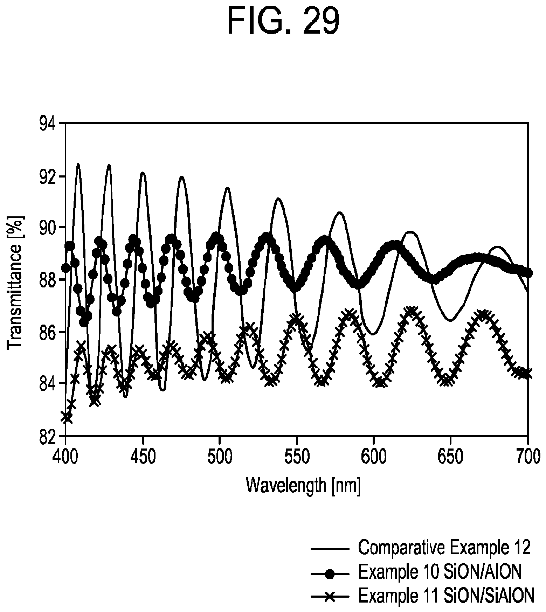

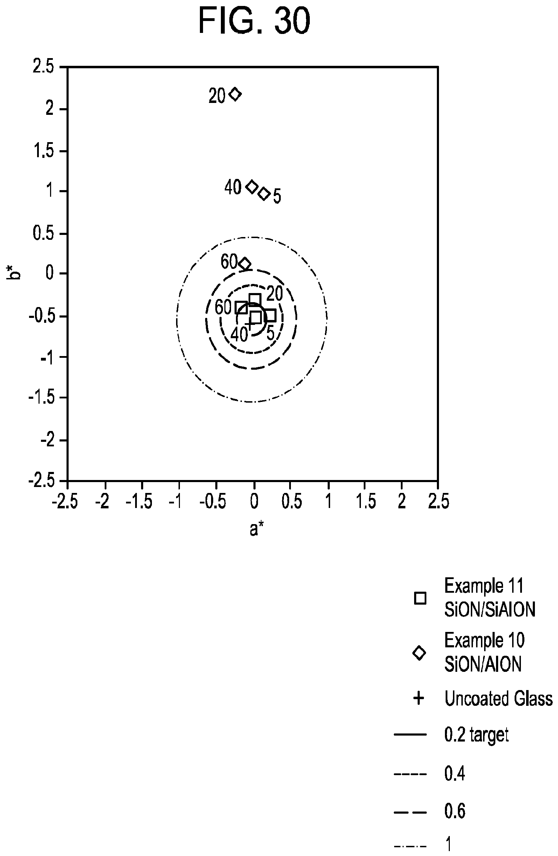

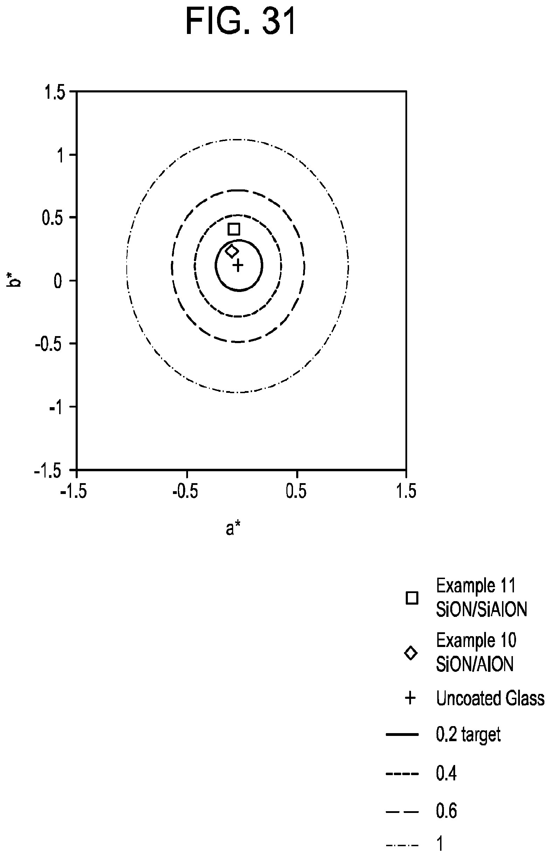

The optical properties of Examples 10 and 11 and Comparative Example 12 are summarized in Figures 29-31. Figure 29 shows the transmittance spectra for Examples 10-11 and Comparative Example 12. Figure 30 shows the measured reflected light color coordinates for Examples 10-11 with F2 illumination at different incident illumination angles (e.g., 5, 20, 40, and 60 degrees). Figure 31 shows the measured transmitted light color coordinates for Examples 10-11 with D65 illumination at an incident illumination angle of 5 degrees. Circular target lines are shown in Figures 30 and 31 as guides for the eye.

The oscillation amplitudes in transmittance for Example 10 was measured as less than about 3 percentage points for any 50 nm or 100 nm wavelength range segment, within the broader wavelength range from about 450 nm to about 650nm, or from about 400 nm to about 700 nm. As shown in Figure 30, the maximum variation in reflected color coordinates for Example 10 under F2 illumination with measurement incident illumination angle varying from 5 to 60 degrees was less than +/- 1.5 in b* color coordinate and less than +/- 0.5 in a* color coordinate. As shown in Figure 31, the transmitted color coordinates for Example 10 under D65 illumination at 5 degree incident illumination angle varies from the uncoated glass color coordinates by less than +/- 0.2 in b* color coordinate and less than +/- 0.1 in a* color coordinate.

The oscillation amplitudes in transmittance for Example 11 was measured as less than about 3 percentage points for any 50nm or 100nm wavelength range segment, within the broader wavelength range from about 450 nm to about 650nm, or from about 400 nm to about 700 nm. In some instances, the oscillation amplitude was even less than 2 percentage points from some 50 nm or 100 nm wavelength range segments. As shown in Figure 30, the maximum variation in reflected color coordinates for Example 11 under F2 illumination with measurement incident illumination angle varying from 5 to 60 degrees is less than +/- 0.4 in both a* and b* color coordinates. As shown in Figure 31, the transmitted color coordinates for Example 11 under D65 illumination at 5 degrees varies from the uncoated glass color coordinates by less than +/- 0.4 in b* color coordinate and less than +/- 0.1 in a* color coordinate.

The oscillation amplitudes in transmittance for Comparative Example 12 were comparatively large, as shown in Figure 29. From this data, it can be predicted that the color coordinates a* and b* would vary substantially under the same illuminants and the same incident illumination angles as used to evaluate Examples 10 and 11.

The absolute color coordinates for Examples 10 and 11 could be further tuned by adding a capping layer (e.g., a capping layer having a thickness in the range from about 5 nm to about 25 nm of SiO₂ or SiOₓN_{y}), as shown in the modeled Examples. The range of color variation and reflectance/transmittance oscillations seen in Examples 10 and 11 is in a low and useful range, although the color variation is somewhat larger than that seen in the modeled Examples. This difference between the modeled Examples 1-9 and Examples 10-11 is believed to be a function of layer thickness and index variations encountered during the reactive RF sputtering process. There are a variety of methods known in the art for forming the optical films of Examples 10-11 and described herein, which were not used in these experiments, which could further improve the control of the experimentally fabricated layer and sub-layer thicknesses and refractive indices. Exemplary methods include slower deposition rates for the thinnest layers in the optical film, optical or quartz crystal thickness monitoring of layer or sub-layer thickness during deposition, plasma emission or mass spectrometric monitoring of the gas composition in the chamber during deposition; and other known techniques used to control layer thickness and composition in thin film deposition.

The optical interference layers used in the Examples were designed to minimize reflection between the scratch-resistant layer and the substrate, thus reducing reflectance oscillation for the entire article. The reduced reflectance oscillation (or reflectance oscillations having reduced amplitudes), provided low observed color and low color shifts at different incidence viewing angles under multiple illumination sources, including illumination sources with sharp wavelength spikes such as CIE F2 and F10 illumination. The scratch-resistant layer exhibited a hardness of greater than about 15 GPa when measured using a Berkovitch indenter, as described herein, and in some cases even greater than 20 GPa.

### EXAMPLE 13

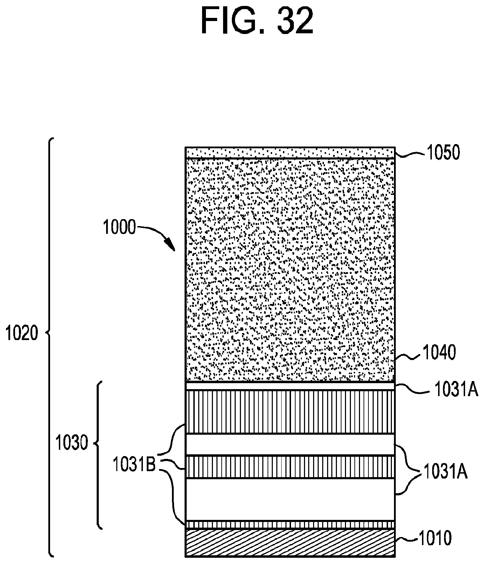

Modeled Example 13 included an article 1000 with a chemically strengthened glass substrate 1010 and an optical film 1020 disposed on the substrate. The optical film 1020 included an optical interference layer 1030, a scratch resistant layer 1040 disposed on the optical interference layer, and a capping layer 1050 disposed on the scratch-resistant layer 1040. The optical interference layer included three sets of sub-layers 1031A, 1031B, between the substrate and the scratch-resistant layer, as shown in Figure 32. The optical film materials and thicknesses of each layer, in the order arranged in the optical film, are provided in Table 21.

**Table 21: Optical film attributes for modeled Example 13.**

| Layer | | Material | Modeled Thickness |
|---|---|---|---|
| Ambient medium | | Air | Immersed |
| Capping layer | | SiO₂ | 10 nm |
| Scratch-resistant layer | | AlOxNy | 2000 nm |
| Optical interference layer | 1^{st} low RI sub-layer | SiO₂ | 10 nm |
| | 2^{nd} high RI sub-layer | AlOxNy | 50 nm |
| | 1^{st} low RI sub-layer | SiO₂ | 25 nm |
| | 2^{nd} high RI sub-layer | AlOxNy | 25 nm |
| | 1^{st} low RI sub-layer | SiO₂ | 50 nm |
| | 2^{nd} high sub-layer | AlOxNy | 10 nm |
| Substrate | | ABS Glass | Immersed |

Example 13 has symmetrical optical interference layer. In one or more embodiments, the optical interference layer may be modified to have different sub-layers and sub-layers with different thicknesses so long as the symmetry is preserved.

## Claims

1. A device comprising:
a cover article (100,200,300,400,500,600,700,800,900), the cover article (100,200,300,400,500,600,700,800,900) comprising a substrate (110,210,310,410,510,610,710,810,910) having a surface, and an optical film (120,220,320,420,520,620,720,820,920) disposed on the substrate (110,210,310,410,510,610,710,810,910) surface forming a coated surface, the optical film comprising a scratch-resistant layer (140,240,340,440,540,640,740,840,940) and an optical interference layer (130,230,330,430,530,630,730,830,930), wherein the optical interference layer (130,230,330,430,530,630,730,830,930) comprises a physical thickness of 800 nm or less and wherein the optical interference layer (130,230,330,430,530,630,730,830,930) is disposed between the scratch-resistant layer (140,240,340,440,540,640,740,840,940) and the substrate (110,210,310,410,510,610,710,810,910),
wherein the optical interference layer (130,230,330,430,530,630,730,830,930) comprises a first low refractive index (RI) sub-layer (131A,231A,331A,431A,531A,631A,731A,831A,931A) and a second high refractive index (RI) sub-layer (131B,231B,331B,431B,531B,631B,731B,831B,931B), wherein the difference between the refractive index of the first low RI sub-layer (131A,231A,331A,431A,531A,631A,731A,831A,931A) and the refractive index of the second high RI sub-layer (131B,231B,331B,431B,531B,631B,731B,831B,931B) is 0.01 or greater; and
wherein the cover article comprises an average hardness of 8 GPa or greater, as measured by a Berkovich Indenter Hardness Test along indentation depths of 100 nm or greater,
**characterised in that**:
the cover article (100,200,300,400,500,600,700,800,900) further comprises a capping layer (150,250,350,450,550,650,750,850,950) disposed on the scratch-resistant layer, the capping layer comprising SiO₂ and/or SiOₓN_{y};
the first low RI sub-layer (131A,231A,331A,431A,531A,631A,731A,831A,931A) and the second high RI sub-layer (131B,231B,331B,431B,531B,631B,731B,831B,931B) each have an optical thickness in the range of from 15 nm to 100 nm; and
the cover article (100,200,300,400,500,600,700,800,900) comprises a color shift of 2 or less, when viewed at least one incident illumination angle in the range from 2 degrees to 60 degrees from normal incidence under illuminant comprising CIE A illuminants, CIE B illuminants CIE C illuminants, CIE D illuminants or CIE F illuminants, and further wherein color shift is determined by the equation √((a*₂-a*₁)²+(b*₂-b*₁)²), where a*₁ and b*₁ are coordinates of the article when viewed at normal incidence and a*₂, and b*₂ are coordinates of the article viewed at the incident illumination angle, and wherein the coordinates of the article when viewed at normal incidence and at the at least one incident illumination angle are both in transmittance or reflectance.

2. The device of claim 1, wherein the optical interference layer (130,230,330,430,530,630,730,830,930) comprises a physical thickness from 10 nm to 500 nm.

3. The device of claim 1, wherein the optical interference layer (130,230,330,430,530,630,730,830,930) comprises a physical thickness from 10 nm to 450 nm.

4. The device of claim 1, wherein the optical interference layer (130,230,330,430,530,630,730,830,930) comprises a physical thickness from 50 nm to 300 nm.

5. The device of claim 1, wherein:
the first low RI sub-layer (131A,231A,331A,431A,531A,631A,731A,831A,931A) comprises at least one of SiO₂, Al₂O₃, GeO₂, SiO, AlOₓN_{y}, SiOₓN_{y}, SiᵤAlᵥOₓN_{y}, MgO, MgF₂, BaF₂, CaF₂, DyF₃, YbF₃, YF₃, and CeF₃, and
the second high RI sub-layer (131B,231B,331B,431B,531B,631B,731B,831B,931B) comprises at least one of SiᵤAlᵥOₓN_{y}, Ta₂O₅, Nb₂O₅, AlN, Si₃N₄, AlOₓN_{y}, SiOₓN_{y}, HfO₂, TiO₂, ZrO₂, Y₂O₃, Al₂O₃, and MoO₃.

6. The device of claim 1 or claim 5, wherein the second high RI sub-layer (131B,231B,331B,431B,531B,631B,731B,831B,931B) comprises at least one of SiᵤAlᵥOₓN_{y}, Si₃N₄, and SiOₓN_{y}.

7. The device of any one of claims 1-4, wherein the optical interference layer (130,230,330,430,530,630,730,830,930) comprises an average light reflection of 2% or less over the optical wavelength regime.

8. The device of any one of claims 1-4, wherein the substrate (110,210,310,410,510,610,710,810,910) comprises a glass selected from the group consisting of soda lime glass, alkali aluminosilicate glass, alkali containing borosilicate glass and alkali aluminoborosilicate glass.

9. The device of any one of claims 1 to 7, wherein the substrate (110,210,310,410,510,610,710,810,910) comprises a crystalline substrate (110,210,310,410,510,610,710,810,910), optionally wherein the substrate comprises a glass-ceramic.

10. The device of any one of claims 1-4, wherein the substrate (110,210,310,410,510,610,710,810,910) comprises a glass that is chemically strengthened and comprises a compressive stress (CS) layer with a surface CS of at least 250 MPa extending within the chemically strengthened glass from a surface of the chemically strengthened glass to a depth of layer (DOL) of at least 10 µm.

11. The device of claim 1,wherein:
The optical interference layer (130,230,330,430,530,630,730,830,930) comprises at least one set of sub-layers, the set of sub-layers comprising a first low refractive index (RI) sub-layer (131A,231A,331A,431A,531A,631A,731A,831A,931A) and a second high refractive index (RI) sub-layer (131B,231B,331B,431B,531B,631B, 731B,831B,931B), the scratch-resistant layer (140,240,340,440,540,640,740,840,940) having a physical thickness from 0.1 microns to 2 microns, and
wherein each of the sub-layers in the optical interference layer (130,230,330,430,530,630,730,830,930) has an optical thickness (n*d) in the range from 2 nm to 200 nm, and at least one layer in the optical interference layer (130,230,330,430,530,630,730,830,930) comprises an optical thickness of 50 nm or greater.

12. A device comprising:
a cover article (100,200,300,400,500,600,700,800,900), the cover article (100,200,300,400,500,600,700,800,900) comprising a substrate (110,210,310,410,510,610,710,810,910) having a surface, and an optical film (120,220,320,420,520,620,720,820,920) disposed on the substrate (110,210,310,410,510,610,710,810,910) surface forming a coated surface, the optical film comprising a scratch-resistant layer (140,240,340,440,540,640,740,840,940) and an optical interference layer (130,230,330,430,530,630,730,830,930), wherein the optical interference layer (130,230,330,430,530,630,730,830,930) comprises a physical thickness of 800 nm or less,
wherein the optical interference layer (130,230,330,430,530,630,730,830,930) comprises a first low refractive index (RI) sub-layer (131A,231A,331A,431A,531A,631A,731A,831A,931A) and a second high refractive index (RI) sub-layer (131B,231B,331B,431B,531B,631B,731B,831B,931B), wherein the difference between the refractive index of the first low RI sub-layer (131A,231A,331A,431A,531A,631A,731A,831A,931A) and the refractive index of the second high RI sub-layer (131B,231B,331B,431B,531B,631B,731B,831B,931B) is 0.01 or greater; and
wherein the cover article (100,200,300,400,500,600,700,800,900) comprises an average hardness of 8 GPa or greater, as measured by a Berkovich Indenter Hardness Test along indentation depths of 100 nm or greater,
**characterised in that**:
the first low RI sub-layer (131A,231A,331A,431A,531A,631A,731A,831A,931A) and the second high RI sub-layer (131B,231B,331B,431B,531B,631B,731B,831B,931B) each have an optical thickness in the range of from 15 nm to 100 nm;
the scratch-resistant layer (140,240,340,440,540,640,740,840,940) comprises one or more of AlN, Si₃N₄, AlOₓN_{y}, SiOₓN_{y}, Al₂O₃, SiₓC_{y}, SiₓO_{y}C_{z}, ZrO₂, TiOₓN_{y}, diamond, diamond-like carbon, and SiᵤAlᵥOₓN_{y} and a physical thickness of from 0.1 micrometres to 2 micrometres; and
the cover article (100,200,300,400,500,600,700,800,900) comprises a color shift of 2 or less, when viewed at least one incident illumination angle in the range from 2 degrees to 60 degrees from normal incidence under an illuminant comprising CIE A illuminants, CIE B illuminants CIE C illuminants, CIE D illuminants or CIE F illuminants, and further wherein color shift is determined by the equation √((a*₂-a*₁)²+(b*₂-b*₁)²), where a*₁ and b*₁ are coordinates of the article when viewed at normal incidence and a*₂, and b*₂ are coordinates of the article viewed at the incident illumination angle, and wherein the coordinates of the article when viewed at normal incidence and at the at least one incident illumination angle are both in transmittance or reflectance.

## Patentansprüche

1. Vorrichtung, umfassend:
einen Abdeckartikel (100,200,300,400,500,600,700,800,900), wobei der Abdeckartikel (100,200,300,400,500,600,700,800,900) ein Substrat (110,210,310,410,510,610,710,810,910), das eine Oberfläche aufweist, und einen optischen Film (120,220,320,420,520,620,720,820,920) umfasst, der auf der Oberfläche des Substrats (110,210,310,410,510,610,710,810,910) angeordnet ist und eine beschichtete Oberfläche bildet, wobei der optische Film eine kratzfeste Schicht (140,240,340,440,540,640,740,840,940) und eine optische Interferenzschicht (130,230,330,430,530,630,730,830,930) umfasst, wobei die optische Interferenzschicht (130,230,330,430,530,630,730,830,930) eine physikalische Dicke von 800 nm oder weniger umfasst und wobei die optische Interferenzschicht (130,230,330,430,530,630,730,830,930) zwischen der kratzfesten Schicht (140,240,340,440,540,640,740,840,940) und dem Substrat (110,210,310,410,510,610,710,810,910) angeordnet ist,
wobei die optische Interferenzschicht (130,230,330,430,530,630,730,830,930) eine erste Unterschicht (131A,231A,331A,431A,531A,631A,731A,831A,931A) mit einem niedrigen Brechungsindex (RI) und eine zweite Unterschicht (131B,231B,331B,431B,531B,631B,731B,831B,931B) mit einem hohen Brechungsindex (RI) umfasst, wobei die Differenz zwischen dem Brechungsindex der ersten Unterschicht (131A,231A,331A,431A,531A,631A,731A,831A,931A) mit einem niedrigen RI und dem Brechungsindex der zweiten Unterschicht (131B,231B,331B,431B,531B,631B,731B,831B,931B) mit einem hohen RI 0,01 oder größer ist; und
wobei der Abdeckartikel eine durchschnittliche Härte von 8 GPa oder größer, wie durch einen Berkovich-Indenter-Härteversuch entlang Eindringtiefen von 100 nm oder größer gemessen, umfasst,
**dadurch gekennzeichnet, dass**:
der Abdeckartikel (100,200,300,400,500,600,700,800,900) ferner eine Kappenschicht (150,250,350,450,550,650,750,850,950) umfasst, die auf der kratzfesten Schicht angeordnet ist, wobei die Kappenschicht SiO₂ und/oder SiOₓN_{y} umfasst;
die erste Unterschicht (131A,231A,331A,431A,531A,631A,731A,831A,931A) mit einem niedrigen RI und die zweite Unterschicht (131B,231B,331B,431B,531B,631B,731B,831B,931B) mit einem hohen RI jeweils eine optische Dicke im Bereich von 15 nm bis 100 nm aufweisen; und
der Abdeckartikel (100,200,300,400,500,600,700,800,900) eine Farbverschiebung von 2 oder weniger umfasst, bei Betrachtung bei mindestens einem Einfallsbeleuchtungswinkel im Bereich von 2 Grad bis 60 Grad vom normalen Einfall unter einem Leuchtmittel, das CIE-A-Leuchtmittel, CIE-B-Leuchtmittel, CIE-C-Leuchtmittel, CIE-D-Leuchtmittel oder CIE-F-Leuchtmittel umfasst, und wobei ferner eine Farbverschiebung durch die Gleichung √((a*₂-a*₁)²+(b*₂-b*₁)²) bestimmt wird, wobei a*₁ und b*₁ Koordinaten des Artikels bei Betrachtung bei normalem Einfall sind und a*₂ und b*₂ Koordinaten des Artikels bei Betrachtung bei dem Einfallsbeleuchtungswinkel sind und wobei die Koordinaten des Artikels bei Betrachtung bei normalem Einfall und bei dem mindestens einen Einfallsbeleuchtungswinkel beide in Transmission oder Reflexion sind.

2. Vorrichtung nach Anspruch 1, wobei die optische Interferenzschicht (130,230,330,430,530,630,730,830,930) eine physikalische Dicke von 10 nm bis 500 nm umfasst.

3. Vorrichtung nach Anspruch 1, wobei die optische Interferenzschicht (130,230,330,430,530,630,730,830,930) eine physikalische Dicke von 10 nm bis 450 nm umfasst.

4. Vorrichtung nach Anspruch 1, wobei die optische Interferenzschicht (130,230,330,430,530,630,730,830,930) eine physikalische Dicke von 50 nm bis 300 nm umfasst.

5. Vorrichtung nach Anspruch 1, wobei:
die erste Unterschicht (131A,231A,331A,431A,531A,631A,731A,831A,931A) mit einem niedrigen RI mindestens eines von SiO₂, Al₂O₃, GeO₂, SiO, AlOₓN_{y}, SiOₓN_{y}, SiᵤAlᵥOₓN_{y}, MgO, MgF₂, BaF₂, CaF₂, DyF₃, YbF₃, YF₃ und CeF₃ umfasst und
die zweite Unterschicht (131B,231B,331B,431B,531B,631B,731B,831B,931B) mit einem hohen RI mindestens eines von SiᵤAlᵥOₓN_{y}, Ta₂O₅, Nb₂O₅, AlN, Si₃N₄, AlOₓN_{y}, SiOₓN_{y}, HfO₂, TiO₂, ZrO₂, Y₂O₃, Al₂O₃ und MoO₃ umfasst.

6. Vorrichtung nach Anspruch 1 oder Anspruch 5, wobei die zweite Unterschicht (131B,231B,331B,431B,531B,631B,731B,831B,931B) mit einem hohen RI mindestens eines von SiᵤAlᵥOₓN_{y}, Si₃N₄ und SiOₓN_{y} umfasst.

7. Vorrichtung nach einem der Ansprüche 1-4, wobei die optische Interferenzschicht (130,230,330,430,530,630,730,830,930) eine durchschnittliche Lichtreflexion von 2 % oder weniger über den optischen Wellenlängenbereich umfasst.

8. Vorrichtung nach einem der Ansprüche 1-4, wobei das Substrat (110,210,310,410,510,610,710,810,910) ein Glas umfasst, das ausgewählt ist aus der Gruppe bestehend aus Natron-Kalk-Glas, Alkali-Aluminosilikatglas, Alkali enthaltendem Borosilikatglas und Alkali-Aluminoborsilikatglas.

9. Vorrichtung nach einem der Ansprüche 1 bis 7, wobei das Substrat (110,210,310,410,510,610,710,810,910) ein kristallines Substrat (110,210,310,410,510,610,710,810,910) umfasst, wobei optional das Substrat eine Glaskeramik umfasst.

10. Vorrichtung nach einem der Ansprüche 1-4, wobei das Substrat (110,210,310,410,510,610,710,810,910) ein Glas umfasst, das chemisch gehärtet ist und eine Druckspannungs(CS-)Schicht mit einer Oberflächen-CS von mindestens 250 MPa umfasst, die sich innerhalb des chemisch gehärteten Glases von einer Oberfläche des chemisch gehärteten Glases bis zu einer Schichttiefe (DoL) von mindestens 10 µm erstreckt.

11. Vorrichtung nach Anspruch 1, wobei:
die optische Interferenzschicht (130,230,330,430,530,630,730,830,930) mindestens einen Satz an Unterschichten umfasst, wobei der Satz an Unterschichten eine erste Unterschicht (131A,231A,331A,431A,531A,631A,731A,831A,931A) mit einem niedrigen Brechungsindex (RI) und eine zweite Unterschicht (131B,231B,331B,431B,531B,631B,731B,831B,931B) mit einem hohen Brechungsindex (RI) umfasst, wobei die kratzfeste Schicht (140,240,340,440,540,640,740,840,940) eine physikalische Dicke von 0,1 Mikron bis 2 Mikron aufweist, und
wobei jede der Unterschichten in der optischen Interferenzschicht (130,230,330,430,530,630,730,830,930) eine optische Dicke (n*d) im Bereich von 2 nm bis 200 nm aufweist und mindestens eine Schicht in der optischen Interferenzschicht (130,230,330,430,530,630,730,830,930) eine optische Dicke von 50 nm oder größer umfasst.

12. Vorrichtung, umfassend:
einen Abdeckartikel (100,200,300,400,500,600,700,800,900), wobei der Abdeckartikel (100,200,300,400,500,600,700,800,900) ein Substrat (110,210,310,410,510,610,710,810,910), das eine Oberfläche aufweist, und einen optischen Film (120,220,320,420,520,620,720,820,920) umfasst, der auf der Oberfläche des Substrats (110,210,310,410,510,610,710,810,910) angeordnet ist und eine beschichtete Oberfläche bildet, wobei der optische Film eine kratzfeste Schicht (140,240,340,440,540,640,740,840,940) und eine optische Interferenzschicht (130,230,330,430,530,630,730,830,930) umfasst, wobei die optische Interferenzschicht (130,230,330,430,530,630,730,830,930) eine physikalische Dicke von 800 nm oder weniger umfasst,
wobei die optische Interferenzschicht (130,230,330,430,530,630,730,830,930) eine erste Unterschicht (131A,231A,331A,431A,531A,631A,731A,831A,931A) mit einem niedrigen Brechungsindex (RI) und eine zweite Unterschicht (131B,231B,331B,431B,531B,631B,731B,831B,931B) mit einem hohen Brechungsindex (RI) umfasst, wobei die Differenz zwischen dem Brechungsindex der ersten Unterschicht (131A,231A,331A,431A,531A,631A,731A,831A,931A) mit einem niedrigen RI und dem Brechungsindex der zweiten Unterschicht (131B,231B,331B,431B,531B,631B,731B,831B,931B) mit einem hohen RI 0,01 oder größer ist; und
wobei der Abdeckartikel (100,200,300,400,500,600,700,800,900) eine durchschnittliche Härte von 8 GPa oder größer, wie durch einen Berkovich-Indenter-Härteversuch entlang Eindringtiefen von 100 nm oder größer gemessen, umfasst,
**dadurch gekennzeichnet, dass**:
die erste Unterschicht (131A,231A,331A,431A,531A,631A,731A,831A,931A) mit einem niedrigen RI und die zweite Unterschicht (131B,231B,331B,431B,531B,631B,731B,831B,931B) mit einem hohen RI jeweils eine optische Dicke im Bereich von 15 nm bis 100 nm aufweisen; und
die kratzfeste Schicht (140,240,340,440,540,640,740,840,940) eines oder mehrere von AlN, Si₃N₄, AlOₓN_{y}, SiOₓN_{y}, Al₂O₃, SiₓC_{y}, SiₓO_{y}C_{z}, ZrO₂, TiOₓN_{y}, Diamant, diamantartigem Kohlenstoff und SiᵤAlᵥOₓN_{y} und eine physikalische Dicke von 0,1 Mikrometer bis 2 Mikrometer umfasst; und
der Abdeckartikel (100,200,300,400,500,600,700,800,900) eine Farbverschiebung von 2 oder weniger umfasst, bei Betrachtung bei mindestens einem Einfallsbeleuchtungswinkel im Bereich von 2 Grad bis 60 Grad vom normalen Einfall unter einem Leuchtmittel, das CIE-A-Leuchtmittel, CIE-B-Leuchtmittel, CIE-C-Leuchtmittel, CIE-D-Leuchtmittel oder CIE-F-Leuchtmittel umfasst, und wobei ferner eine Farbverschiebung durch die Gleichung √((a*₂-a*₁)²+(b*₂-b*₁)²) bestimmt wird, wobei a*₁ und b*₁ Koordinaten des Artikels bei Betrachtung bei normalem Einfall sind und a*₂ und b*₂ Koordinaten des Artikels bei Betrachtung bei dem Einfallsbeleuchtungswinkel sind und wobei die Koordinaten des Artikels bei Betrachtung bei normalem Einfall und bei dem mindestens einen Einfallsbeleuchtungswinkel beide in Transmission oder Reflexion sind.

## Revendications

1. Dispositif comprenant :
un article de couverture (100,200,300,400,500,600,700,800,900), l'article de couverture (100,200,300,400,500,600,700,800,900) comprenant un substrat
(110,210,310,410,510,610,710,810,910) présentant une surface, et un film optique
(120,220,320,420,520,620,720,820,920) disposé sur la surface de substrat
(110,210,310,410,510,610,710,810,910) formant une surface revêtue, le film optique comprenant une couche résistante aux rayures (140,240,340,440,540,640,740,840,940) et une couche d'interférence optique (130,230,330,430,530,630,730,830,930), ladite couche d'interférence optique (130,230,330,430,530,630,730,830,930) comprenant une épaisseur physique inférieure ou égale à 800 nm et ladite couche d'interférence optique (130,230,330,430,530,630,730,830,930) étant disposée entre la couche résistante aux rayures (140,240,340,440,540,640,740,840,940) et le substrat (110,210,310,410,510,610,710,810,910),
ladite couche d'interférence optique (130,230,330,430,530,630,730,830,930) comprenant une première sous-couche à faible indice de réfraction (RI) (131A,231A,331A,431A,531A,631A,731A,831A,931A) et une seconde sous-couche à indice de réfraction (RI) élevé (131B,231B,331B,431B,531B,631B,731B,831B,931B), ladite différence entre l'indice de réfraction de la première sous-couche à faible RI (131A,231A,331A,431A,531A,631A,731A,831A,931A) et l'indice de réfraction de la seconde sous-couche à RI élevé (131B,231B,331B,431B,531B,631B,731B,831B,931B) étant supérieure ou égale à 0,01 ; et
ledit article de couverture comprenant une dureté moyenne supérieure ou égale à 8 GPa, telle que mesurée par un essai de dureté avec pénétrateur de Berkovich le long de profondeurs d'indentation supérieures ou égales à 100 nm,
**caractérisé en ce que** :
l'article de couverture (100,200,300,400,500,600,700,800,900) comprend en outre une couche de recouvrement (150,250,350,450,550,650,750,850,950) disposée sur la couche résistante aux rayures, la couche de recouvrement comprenant SiO₂ et/ou SiOₓN_{y} ;
la première sous-couche à faible RI (131A,231A,331A,431A,531A,631A,731A,831A,931A) et la seconde sous-couche à RI élevé (131B,231B,331B,431B,531B,631B,731B,831B,931B) possèdent chacune une épaisseur optique comprise dans la plage allant de 15 nm à 100 nm ; et
l'article de couverture (100,200,300,400,500,600,700,800,900) comprend un décalage de couleur inférieur ou égal à 2, lorsqu'il est vu selon au moins un angle d'éclairage incident compris dans la plage allant de 2 degrés à 60 degrés par rapport à l'incidence normale sous un éclairage comprenant des sources lumineuses A selon la commission international de l'éclairage, CIE, des sources lumineuses B selon la CIE, des sources lumineuses C selon la CIE, des sources lumineuses D selon la CIE ou des sources lumineuses F selon la CIE, et en outre ledit décalage de couleur étant déterminé par l'équation √((a*₂-a*₁)²+(b*₂-b*₁)²), où a*₁ et b*₁ sont les coordonnées de l'article lorsqu'il est vu à l'incidence normale et a*₂ et b*₂ sont les coordonnées de l'article vu à l'angle d'éclairage incident, et lesdites coordonnées de l'article lorsqu'il est vu à l'incidence normale et à l'au moins un angle d'éclairage incident étant à la fois en transmittance ou en réflectance.

2. Dispositif de la revendication 1, ladite couche d'interférence optique (130,230,330,430,530,630,730,830,930) comprenant une épaisseur physique allant de 10 nm à 500 nm.

3. Dispositif de la revendication 1, ladite couche d'interférence optique (130,230,330,430,530,630,730,830,930) comprenant une épaisseur physique allant de 10 nm à 450 nm.

4. Dispositif de la revendication 1, ladite couche d'interférence optique (130,230,330,430,530,630,730,830,930) comprenant une épaisseur physique allant de 50 nm à 300 nm.

5. Dispositif de la revendication 1 :
ladite première sous-couche à faible RI (131A,231A,331A,431A,531A,631A,731A,831A,931A) comprenant au moins un parmi SiO₂, Al₂O₃, GeO₂, SiO, AlOₓN_{y}, SiOₓN_{y}, SiᵤAlᵥOₓN_{y}, MgO, MgF₂, BaF₂, CaF₂, DyF₃, YbF₃, YF₃ et CeF₃, et
la seconde sous-couche à RI élevé (131B,231B,331B,431B,531B,631B,731B,831B,931B) comprenant au moins un parmi SiᵤAlᵥOₓN_{y}, Ta₂O₅, Nb₂O₅, AlN, Si₃N₄, AlOₓN_{y}, SiOₓN_{y}, HfO₂, TiO₂, ZrO₂, Y₂O₃, Al₂O₃ et MoO₃.

6. Dispositif de la revendication 1 ou de la revendication 5, ladite seconde sous-couche à RI élevé (131B,231B,331B,431B,531B,631B,731B,831B,931B) comprenant au moins un parmi SiᵤAlᵥOₓN_{y}, Si₃N₄ et SiOₓN_{y}.

7. Dispositif de l'une quelconque des revendications 1 à 4, ladite couche d'interférence optique (130,230,330,430,530,630,730,830,930) comprenant une réflexion de lumière moyenne inférieure ou égale à 2 % sur le régime de longueur d'onde optique.

8. Dispositif de l'une quelconque des revendications 1 à 4, ledit substrat (110,210,310,410,510,610,710,810,910) comprenant un verre choisi dans le groupe constitué du verre sodocalcique, du verre d'aluminosilicate alcalin, du verre de borosilicate contenant un alcali et du verre d'aluminoborosilicate alcalin.

9. Dispositif de l'une quelconque des revendications 1 à 7, ledit substrat (110,210,310,410,510,610,710,810,910) comprenant un substrat cristallin (110,210,310,410,510,610,710,810,910) éventuellement ledit substrat comprenant une vitrocéramique.

10. Dispositif de l'une quelconque des revendications 1 à 4, ledit substrat (110,210,310,410,510,610,710,810,910) comprenant un verre qui est chimiquement renforcé et comprenant une couche de contrainte de compression (CS) avec une CS de surface supérieure ou égale à 250 MPa s'étendant à l'intérieur du verre chimiquement renforcé à partir d'une surface du verre chimiquement renforcé jusqu'à une profondeur de couche (DOL) supérieure ou égale à 10 µm.

11. Dispositif de la revendication 1 :
ladite couche d'interférence optique (130,230,330,430,530,630,730,830,930) comprenant au moins un ensemble de sous-couches, l'ensemble de sous-couches comprenant une première sous-couche à faible indice de réfraction (RI) (131A,231A,331A,431A,531A,631A,731A,831A,931A) et une seconde sous-couche à indice de réfraction (RI) élevé (131B,231B,331B,431B,531B,631B,731B,831B,931B), ladite couche résistante aux rayures (140,240,340,440,540,640,740,840,940) possédant une épaisseur physique allant de 0,1 micron à 2 microns, et
chacune des sous-couches de la couche d'interférence optique (130,230,330,430,530,630,730,830,930) possédant une épaisseur optique (n*d) comprise dans la plage allant de 2 nm à 200 nm, et au moins une couche de la couche d'interférence optique (130,230,330,430,530,630,730,830,930) comprenant une épaisseur optique supérieure ou égale à 50 nm.

12. Dispositif comprenant :
un article de couverture (100,200,300,400,500,600,700,800,900), l'article de couverture (100,200,300,400,500,600,700,800,900) comprenant un substrat (110,210,310,410,510,610,710,810,910) présentant une surface, et un film optique (120,220,320,420,520,620,720,820,920) disposé sur la surface du substrat (110,210,310,410,510,610,710,810,910) formant une surface revêtue, le film optique comprenant une couche résistante aux rayures (140,240,340,440,540,640,740,840,940) et une couche d'interférence optique (130,230,330,430,530,630,730,830,930), ladite couche d'interférence optique (130,230,330,430,530,630,730,830,930) comprenant une épaisseur physique inférieure ou égale à 800 nm,
ladite couche d'interférence optique (130,230,330,430,530,630,730,830,930) comprenant une première sous-couche à faible indice de réfraction (RI) (131A,231A,331A,431A,531A,631A,731A,831A,931A) et une seconde sous-couche à indice de réfraction (RI) élevé (131B,231B,331B,431B,531B,631B,731B,831B,931B), ladite différence entre l'indice de réfraction de la première sous-couche à faible RI (131A,231A,331A,431A,531A,631A,731A,831A,931A) et l'indice de réfraction de la seconde sous-couche à RI élevé (131B,231B,331B,431B,531B,631B,731B,831B,931B) étant supérieure ou égale à 0,01 ; et
ledit article de couverture (100,200,300,400,500,600,700,800,900) comprenant une dureté moyenne supérieure ou égale à 8 GPa, telle que mesurée par un essai de dureté avec pénétrateur de Berkovich le long de profondeurs d'indentation supérieures ou égales à 100 nm, **caractérisé en ce que** :
la première sous-couche à faible RI (131A,231A,331A,431A,531A,631A,731A,831A,931A) et la seconde sous-couche à RI élevé (131B,231B,331B,431B,531B,631B,731B,831B,931B) possèdent chacune une épaisseur optique comprise dans la plage allant de 15 nm à 100 nm ;
la couche résistante aux rayures (140,240,340,440,540,640,740,840,940) comprend un ou plusieurs parmi AlN, Si₃N₄, AlOₓN_{y}, SiOₓN_{y}, Al₂O₃, SiₓC_{y}, SiₓO_{y}C_{z}, ZrO₂, TiOₓN_{y}, du diamant, du carbone de type diamant et SiᵤAlᵥOₓN_{y} et une épaisseur physique de 0,1 micromètre à 2 micromètres ; et
l'article de couverture (100,200,300,400,500,600,700,800,900) comprend un décalage de couleur inférieur ou égal à 2, lorsqu'il est vu selon au moins un angle d'éclairage incident compris dans la plage allant de 2 degrés à 60 degrés par rapport à l'incidence normale sous un éclairage comprenant des sources lumineuses A selon la CIE, des sources lumineuses B selon la CIE, des sources lumineuses C selon la CIE, des sources lumineuses D selon la CIE ou des sources lumineuses F selon la CIE, et en outre ledit décalage de couleur étant déterminé par l'équation √((a*₂-a*₁)²+(b*₂-b*₁)²), où a*₁ et b*₁ sont les coordonnées de l'article lorsqu'il est vu à l'incidence normale et a*₂ et b*₂ sont les coordonnées de l'article vu à l'angle d'éclairage incident, et lesdites coordonnées de l'article lorsqu'il est vu à l'incidence normale et à l'au moins un angle d'éclairage incident étant à la fois en transmittance ou en réflectance.
